# EUROPEAN PATENT APPLICATION

(11) **EP 4 265 664 A1**
(43) Date of publication of application: **25.10.2023**
(21) Application number: 21910580.6
(22) Date of filing: 16.12.2021
(51) Int. Cl.: C08G 59/40, C08G 18/58, C08G 18/65, C08G 59/18, C08J 5/04, C08K 7/02, C08L 63/00, C08L 75/04

(54) **THERMOSETTING EPOXY RESIN COMPOSITION, MOLDED ARTICLE OF SAME, FIBER-REINFORCED COMPOSITE MATERIAL, MOLDING MATERIAL FOR FIBER-REINFORCED COMPOSITE MATERIALS, AND METHOD FOR PRODUCING FIBER-REINFORCED COMPOSITE MATERIAL**

(30) Priority: 21.12.2020 JP 2020211056; 27.07.2021 JP 2021122176
(71) Applicant: Toray Industries, Inc., Tokyo 103-8666 (JP)
(72) Inventor: TSUCHIDA, Hiroya, Nagoya-shi, Aichi 455-8502 (JP); KONISHI, Daisuke, Nagoya-shi, Aichi 455-8502 (JP); TOMIOKA, Nobuyuki, Nagoya-shi, Aichi 455-8502 (JP)
(74) Representative: Mewburn Ellis LLP
(86) International application number: PCT/JP2021/046477
(87) International publication number: WO 2022/138432

(57) **Abstract**

A purpose of the present invention is to provide a thermosetting epoxy resin composition that manifests latency at a temperature at which the thermosetting resin cures and has an excellent curing rate, and molded articles obtained by thermosetting the same. A further purpose is to provide a fiber-reinforced composite material obtained by blending with reinforcing fibers, a molding material for a fiber-reinforced composite material, and a method for producing a fiber-reinforced composite material. To achieve the above, the thermosetting epoxy resin composition of the present invention is a thermosetting epoxy resin composition including the following constituent elements [a], [b], and [c], wherein the relationship between the curing time (Tc) and the induction time (Ti) satisfies 1<Tc/Ti≦ 9. [a]: Epoxy resin, [b]: isocyanate compound, [c]: inorganic salt

## Description

### TECHNICAL FIELD

The present invention relates to a thermosetting epoxy resin composition, a molded article thereof, a fiber-reinforced composite material, a molding material for a fiber-reinforced composite material, and a production method for a fiber-reinforced composite material.

### BACKGROUND ART

Thermosetting polyurethane resins have been used in various fields as paints, adhesives, foams, elastomers, etc., because they can form cured products that are excellent in flexibility, toughness, and adhesiveness to foreign materials. On the other hand, polyurethane resins are so short in pot life that the viscosity of the resins tends to increase during flow into molds or during impregnation of carriers, leading to the problem of deteriorated quality of molded articles.

Patent document 1 discloses the technique of blending a small amount of epoxy resin into a polyurethane prepolymer and using a Lewis acid-base catalyst in order to lengthen the pot life of resin compositions.

Patent document 2 discloses a catalyst composition that contains an imidazolium based catalyst to realize a longer pot life and provide cured products with higher heat resistance.

### PRIOR ART DOCUMENTS

### PATENT DOCUMENTS

Patent document 1: International Publication WO 2019/046382
Patent document 2: International Publication WO 2016/102358

### SUMMARY OF INVENTION

### PROBLEMS TO BE SOLVED BY THE INVENTION

As a means of lengthening the pot life of a thermosetting resin composition, it is common to select a curing agent or catalyst with low activity, but this causes a decrease in the curing speed and accordingly leads to a longer molding cycle time. When selecting a catalyst to use, furthermore, the key matter is to find one having an activity that suits the molding temperature and it has been generally essential to devise a good process that adopts, for example, different temperatures for injecting and curing the resin. Thus, it has been desired to develop a catalyst and a resin design technology that can realize a high curing speed and control the pot life over a wide temperature range.

The thermosetting resin compositions described in Patent documents 1 and 2 are highly stable at room temperature, but are not sufficiently stable at heat-curing temperatures.

The present invention offers solutions to these problems with the conventional techniques and it aims to provide a thermosetting epoxy resin composition that exhibits high latent potential and a high curing speed at an appropriate curing temperature of the thermosetting resin and also provide moldings produced by heat-curing it. It also aims to provide a fiber-reinforced composite material produced by combining it with a reinforcing fiber, a molding material for a fiber-reinforced composite material, and a production method for a fiber-reinforced composite material.

### MEANS OF SOLVING THE PROBLEMS

After making an intensive study aiming to solve the problems described above, the inventors of the present invention found a thermosetting epoxy resin composition having the following constitution and arrived at the present invention. More specifically, the thermosetting epoxy resin composition according to the present invention has the constitution described below.

A thermosetting epoxy resin composition including the following components [a], [b], and [c] and satisfying the relation 1 < Tc/Ti ≤ 9 wherein Tc is the curing time and Ti is the induction time.
[a]: epoxy resin,
[b]: isocyanate compound
[c]: inorganic salt

Furthermore, the molded article according to the present invention is produced by heat-curing the thermosetting epoxy resin composition according to the present invention.

The first embodiment of the fiber-reinforced composite material according to the present invention includes the molded article according to the present invention and a reinforcing fiber.

The molding material for fiber-reinforced composite material according to the present invention includes the thermosetting epoxy resin composition according to the present invention and a reinforcing fiber.

The second embodiment of the fiber-reinforced composite material according to the present invention is produced by heat-curing the molding material for fiber-reinforced composite material according to the present invention.

The first embodiment of the production method for a fiber-reinforced composite material according to the present invention includes a step for impregnating a reinforcing fiber with the thermosetting epoxy resin according to the present invention and a subsequent step for heat-curing it.

The second embodiment of the production method for a fiber-reinforced composite material according to the present invention includes a step for putting a woven fabric containing a reinforcing fiber as primary component in a mold, a step for injecting the thermosetting epoxy resin composition according to the present invention and impregnating them, and a subsequent step for heat-curing it.

### ADVANTAGEOUS EFFECTS OF THE INVENTION

The present invention can provide a thermosetting epoxy resin composition that exhibits high latent potential and fast curability at an appropriate heat-curing temperature.

### DESCRIPTION OF PREFERRED EMBODIMENTS

The thermosetting epoxy resin composition according to the present invention includes the components [a], [b], and [c] specified below.
[a]: epoxy resin
[b]: isocyanate compound
[c]: inorganic salt

First, these components are described below.

### (Component [a])

The component [a] used for the present invention is an epoxy resin. There are no specific limitations on the epoxy resin as long as it is a compound having an epoxy group in its molecule. Examples thereof include bisphenol A type epoxy resin, bisphenol F type epoxy resin, amine type epoxy resin, and aliphatic epoxy resin having an aliphatic chain in its molecule. These epoxy resins may be used singly or as a combination of a plurality thereof.

Commercial products of bisphenol A type epoxy resin include, for example, jER (registered trademark) 825, jER (registered trademark) 827, jER (registered trademark) 828 (all manufactured by Mitsubishi Chemical Corporation), EPICLON (registered trademark) 840, EPICLON (registered trademark) 850 (both manufactured by DIC Corporation), Epotohto (registered trademark) YD-128, Epotohto (registered trademark) YD-8125, Epotohto (registered trademark) YD-825GS (all manufactured by NIPPON STEEL Chemical & Material Co., Ltd.), DER (registered trademark) 331, and DER (registered trademark) 332 (both manufactured by The Dow Chemical Company).

Commercial products of bisphenol F type epoxy include, for example, jER (registered trademark) 806, jER (registered trademark) 807, jER (registered trademark) 4004P (all manufactured by Mitsubishi Chemical Corporation), EPICLON (registered trademark) 830 (manufactured by DIC Corporation), Epotohto (registered trademark) YD-170, Epotohto (registered trademark) YDF-8170C, and Epotohto (registered trademark) YDF-870GS (all manufactured by NIPPON STEEL Chemical & Material Co., Ltd.).

Examples of amine type epoxy resin include tetraglycidyl diaminodiphenyl methane, tetraglycidyl diaminodiphenyl sulfone, triglycidyl aminophenol, triglycidyl aminocresol, diglycidyl aniline, diglycidyl toluidine, tetraglycidyl xylylenediamine, and halogen-substituted, alkyl-substituted, and hydrogenated derivatives thereof. Commercial products of these epoxy resins include the following.

Commercial products of tetraglycidyl diaminodiphenyl methane include, for example, Sumiepoxy (registered trademark) ELM434 (manufactured by Sumitomo Chemical Co., Ltd.), YH434L (manufactured by NIPPON STEEL Chemical & Material Co., Ltd.), jER (registered trademark) 604 (manufactured by Mitsubishi Chemical Corporation), Araldite (registered trademark) MY720, and Araldite (registered trademark) MY721 (both manufactured by Huntsman Advanced Materials).

Commercial products of tetraglycidyl diaminodiphenyl sulfone include, for example, TG3DAS (manufactured by Mitsui Fine Chemical, Inc.).

Commercial products of triglycidyl aminophenol and triglycidyl aminocresol include, for example, Sumiepoxy (registered trademark) ELM100, Sumiepoxy (registered trademark) ELM120 (both manufactured by Sumitomo Chemical Co., Ltd.), Araldite (registered trademark) MY0500, Araldite (registered trademark) MY0510, Araldite (registered trademark) MY0600 (all manufactured by Huntsman Advanced Materials), and jER (registered trademark) 630 (manufactured by Mitsubishi Chemical Corporation).

Examples of aliphatic epoxy resin include ethylene glycol diglycidyl ether, propylene glycol diglycidyl ether, trimethylene glycol diglycidyl ether, and hexamethylene glycol diglycidyl ether. Commercial products of these epoxy resins include the following.

Commercial products of ethylene glycol diglycidyl ether include, for example, DENACOL (registered trademark) EX-850, DENACOL (registered trademark) EX-851, and DENACOL EX-821 (all manufactured by Nagase ChemteX Corporation).

Commercial products of propylene glycol diglycidyl ether include, for example, DENACOL (registered trademark) EX-911, DENACOL (registered trademark) EX-941, DENACOL (registered trademark) EX-920 (all manufactured by Nagase ChemteX Corporation), and Adeka Glycyrol (registered trademark) ED-506 (manufactured by Adeka Corporation).

Commercial products of hexamethylene glycol diglycidyl ether include, for example, DENACOL (registered trademark) EX-212 (manufactured by Nagase ChemteX Corporation).

### (Component [b])

The component [b] used for the present invention is an isocyanate compound. There are no specific limitations on the isocyanate compound as long as it is a compound having an isocyanate group in its molecule. Such an isocyanate group reacts with the epoxy group of the component [a] through a heat-curing reaction to form a rigid oxazolidone ring structure, thereby producing a molded article that exhibits high resistance to damp heat and toughness.

Such isocyanate compounds include aromatic diisocyanate, aliphatic diisocyanate, and alicyclic diisocyanate. In particular, it is preferable to adopt an aromatic isocyanate having an aromatic group in its molecular skeleton because of having a high curing reaction rate and exhibiting high heat resistance.

Examples of the isocyanate compounds include aliphatic isocyanates such as methylene diisocyanate, ethylene diisocyanate, propylene diisocyanate, trimethylene diisocyanate, dodecamethylene diisocyanate, hexamethylene diisocyanate, tetramethylene diisocyanate, pentamethylene diisocyanate, propylene-1,2-diisocyanate, 2,3-dimethyltetramethylene diisocyanate, butylene-1,2-diisocyanate, butylene-1,3-diisocyanate, 1,4-diisocyanate hexane, cyclopentene-1,3-diisocyanate, isophorone diisocyanate, 1,2,3,4-tetraisocyanate butane, butane-1,2,3-triisocyanate, and α,α,α',α'-tetramethylxylylene diisocyanate; aromatic isocyanates such as p-phenylene diisocyanate, 1-methylphenylene-2,4-diisocyanate, naphthalene-1,4-diisocyanate, tolylene diisocyanate, diphenyl-4,4-diisocyanate, benzene-1,2,4-triisocyanate, xylylene diisocyanate, diphenylmethane diisocyanate (MDI), diphenylpropane diisocyanate, tetramethylenexylene diisocyanate, and polymethylene polyphenyl polyisocyanate; and alicyclic isocyanates such as cyclohexane diisocyanate, methyl cyclohexane diisocyanate, trimethylhexamethylene diisocyanate, isophorone diisocyanate, lysine diisocyanate, methylene bis(4-cyclohexylisocyanate), and isopropylidene dicyclohexyl diisocyanate. Here, these isocyanate compounds may be used singly or as a mixture of two or more thereof.

Commercial products of aliphatic isocyanate include, for example, HDI (manufactured by Tosoh Corporation), Duranate (registered trademark) D101, and Duranate (registered trademark D201 (both manufactured by Asahi Kasei Corporation).

Commercial products of aromatic isocyanate include, for example, Lupranate (registered trademark) MS, Lupranate (registered trademark) MI, Lupranate (registered trademark) M20S, Lupranate (registered trademark) M11S, Lupranate (registered trademark) M5S, Lupranate (registered trademark) T-80, Lupranate (registered trademark) MM-103, Lupranate (registered trademark) MM-102, Lupranate (registered trademark) MM-301 (all manufactured by BASF INOAC Polyurethanes Ltd.), Millionate (registered trademark) MT, Millionate (registered trademark) MT-F, Millionate (registered trademark) MT-NBP, Millionate (registered trademark) NM, Millionate (registered trademark) MR-100, Millionate (registered trademark) MR-200, Millionate (registered trademark) MR-400, Coronate (registered trademark) T-80, Coronate (registered trademark) T-65, Coronate (registered trademark) T-100 (all manufactured by Tosoh Corporation), Cosmonate (registered trademark) PH, Cosmonate (registered trademark) M-50, and Cosmonate (registered trademark) T-80 (all manufactured by Mitsui Chemicals, Inc.).

Commercial products of alicyclic isocyanate include, for example, Takenate (registered trademark) 600 (manufactured by Mitsui Chemicals, Inc.) and FORTIMO (registered trademark) 1,4-H6XDI (manufactured by Mitsui Chemicals, Inc.).

For the thermosetting epoxy resin composition according to the present invention, it is preferable that the stoichiometric ratio [b]/[a] of the component [b] to the component [a] be in the range of 0.7 to 2.0. The stoichiometric ratio [b]/[a] is the ratio of the number of moles of isocyanate groups contained in the component [b] to the number of moles of epoxy groups contained in the component [a]. If the ratio [b]/[a] is in the aforementioned range, it allows the thermosetting epoxy resin composition to show a high curing speed and also allows the thermosetting epoxy resin composition to be cured into a cured resin having high heat resistance.

### (Component [c])

The component [c] used for the present invention is an inorganic salt. The inorganic salt is a salt constituted of a cation originating from an inorganic substance such as a metal element and an anion originating from a base. The inorganic salt of the component [c] acts as a catalyst to promote the curing reaction between the epoxy group in the component [a] and the isocyanate group in the component [b]. The use of such an inorganic salt as a catalyst acts to allow the reaction of the thermosetting epoxy resin composition to be halted for a certain period of time (hereinafter referred to as induction time). Specifically, it develops latent property. In addition, the reaction starts to progress rapidly, thus realizing fast curability, after the induction time. In general, latent property and fast curability conflict with each other and it is difficult to have both of them simultaneously. Latent property of a thermosetting epoxy resin composition as referred to herein for the present invention is defined as the feature of having an induction time as described above while it is exposed to a predetermined temperature.

Here, the effect of latent property and curing time can be evaluated in terms of the ratio Tc/Ti, which is calculated by dividing the curing time (Tc) by the induction time (Ti) that are measured as the thermosetting epoxy resin composition is exposed to a predetermined temperature. Here, the curing time is defined as the period from the start of exposure to a predetermined temperature to the completion of curing, and it includes the induction time. Accordingly, the value of Tc cannot be smaller than the value of Ti, and the ratio Tc/Ti is cannot be lower than 1. It can be said that latent property and fast curability are better balanced as the ratio Tc/Ti comes closer to unity. The thermosetting epoxy resin composition according to the present invention satisfies the relation 1 < Tc/Ti ≤ 9 wherein Tc is the curing time and Ti is the induction time. If the ratio Tc/Ti is higher than 9, it means that the curing time, i.e. the molding cycle time, is too long or that the induction time, i.e. the period in which flowability is maintained in the heat-curing process, is too short, which is unfavorable for resin injection and impregnation.

It is preferable for the thermosetting epoxy resin composition according to the present invention to satisfy the relation 1 < Tc/Ti ≤ 5, more preferably satisfy the relation 1 < Tc/Ti ≤ 3, and still more preferably satisfy the relation 1 < Tc/Ti ≤ 2. A ratio Tc/Ti in this range ensures more preferable fast curability and latent property.

Here, the induction time (Ti) used for the present invention can be evaluated in terms of the complex viscosity η* that is determined by examining the thermosetting epoxy resin composition according to the present invention at an appropriate temperature. For the present invention, Ti is the time period that is required for the value of η* measured at an appropriate temperature using a dynamic viscoelasticity measuring machine to increase by 4 times as large as that at the measurement starting time.

To determine the curing time (Tc) used for the present invention, furthermore, changes in the complex viscosity η* with time are observed at an appropriate temperature and the time period required for the value of η* to level off is adopted as Tc.

It is preferable for the thermosetting epoxy resin composition according to the present invention to meet the following requirement.
0.003 ≤ (number of moles of component [c] / number of moles of epoxy group in component [a]) ≤ 0.05

It is preferable for the ratio to be in this range because it ensures the production of a thermosetting epoxy resin composition having a good balance between fast curability and latent property.

Here, the number of moles of the component [c] is the total number of moles of all inorganic salts incorporated in the thermosetting epoxy resin composition and it is expressed by the following formula.
Number of moles of component [c] = (mass of inorganic salt A/molecular weight of inorganic salt A) + (mass of inorganic salt B/molecular weight of inorganic salt B) + ... + (mass of inorganic salt W/molecular weight of inorganic salt W)

Furthermore, the number of moles of epoxy groups in the component [a] is the total number of moles of all epoxy groups in the epoxy resin, and it is expressed by the following formula. Number of moles of epoxy groups in component [a] = (mass of resin A/epoxy equivalent weight of resin A) + (mass of resin B/epoxy equivalent weight of resin B) + ... + (mass of resin W/epoxy equivalent weight of inorganic salt W)

Examples of inorganic salts used as the component [c] for the present invention include alkali metal salts, alkali earth metal salts, and first transition series metal salts. In particular, it is preferable for the component [c] to contain an alkali metal halide because the thermosetting epoxy resin composition can be cured in a wide temperature range from 50°C to 200°C

Such inorganic salts include, for example, calcium chloride, calcium bromide, calcium iodide, magnesium chloride, magnesium bromide, magnesium iodide, potassium chloride, potassium bromide, potassium iodide, sodium chloride, sodium bromide, sodium iodide, lithium chloride, lithium bromide, and lithium iodide. Of these, lithium halide salts such as lithium chloride, lithium bromide, and lithium iodide are preferable because they ensure a good balance between latent property and fast curability. Here, the inorganic salts listed above may be used singly or as a combination of a plurality thereof.

The thermosetting epoxy resin composition according to the present invention may further include the component [d] specified below. [d]: a compound containing a structure as represented by the formula (I) in its molecule

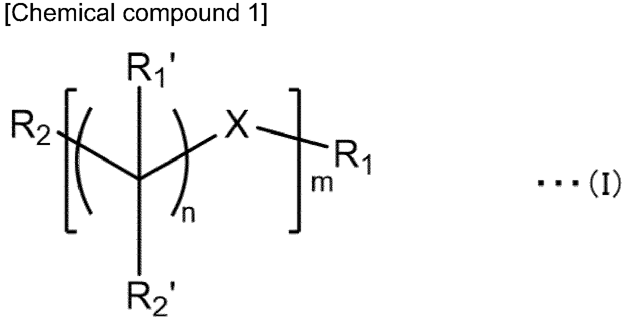

In the formula (I), n is an integer of 1 to 6 and m is an integer of 4 to 1,000. Furthermore, R₁' and R₂' are each independently a hydrogen atom, an alkyl group, or a hydroxyl group. Furthermore, R₁ and R₂ are each independently a hydrogen atom or an alkyl group. Furthermore, X is O, NH, S, or COO. Here, COO represents a chemical structure of OCO as well.

If the component [d] is included, it allows the component [c] to increase in the compatibility with the epoxy resin and accordingly allows the thermosetting epoxy resin composition to increase in fast curability. In addition, the thermosetting epoxy resin composition will be higher in homogeneity and accordingly, the thermosetting epoxy resin composition will be able to be heat-cured into a molded article with better mechanical property.

Examples of the component [d] in which X is O include compounds containing an ethylene glycol chain, propylene glycol chain, trimethylene glycol chain, hexamethylene glycol chain, etc. In addition, examples thereof in which X is NH include compounds containing an ethylene imine chain, trimethylene imine chain, etc. Examples thereof in which X is S include ethylene sulfide and trimethylene sulfide. Examples thereof in which X is COO include compounds containing anmethyl ester chain, ethyl ester chain, etc.

Commercial products of compounds in which X is O include PEG-200, PEG-300, PEG-400, PEG-600, PEG-1000, SANNIX (registered trademark) PP-200, SANNIX (registered trademark) PP-400, SANNIX (registered trademark) PP-600, SANNIX (registered trademark) PL-2100, NEWPOL (registered trademark) BPE-40, NEWPOL (registered trademark) BPE-60, NEWPOL (registered trademark) BPE-100, NEWPOL (registered trademark) BP-5P (all manufactured by Sanyo Chemical Industries Ltd.), UNIOX (registered trademark) M-400, UNIOX (registered trademark) M-550, and UNIOX (registered trademark) MM-400 (all manufactured by NOF Corporation).

Commercial products of compounds in which X is NH include EPOMIN (registered trademark) SP-003, EPOMIN (registered trademark) SP-006, and EPOMIN (registered trademark) SP-012 (all manufactured by Nippon Shokubai Co., Ltd.).

Commercial products of compounds in which X is COO include SANFLEX (registered trademark) EB and SANFLEX (registered trademark) GPA-3000 (both manufactured by Sanyo Chemical Industries Ltd.).

Here, as the component [d], compounds in which X is O are used suitably. If it has a structure in which X is O, that is, has an ether chain, it allows the component [c] and the epoxy resin to become higher in compatibility with each other, and accordingly, it can be used suitably because it will have better curing characteristics and form a cured thermosetting epoxy resin with still better mechanical property. For the thermosetting epoxy resin composition according to the present invention, it is more preferable that R₁'and R₂' in the component [d] are hydrogen atoms and also that X is an O atom because it allows the component [c] and the epoxy resin in particular to become higher in compatibility with each other so that it ensures better curing characteristics and serves to form a cured thermosetting epoxy resin with still better mechanical property. Commercial products of useful compounds as the component [d] in which R₁'and R₂' are hydrogen atoms and X is an O atom include PEG-200, PEG-300, PEG-400, PEG-600, and PEG-1000.

In addition, in the case where any of R₁', R₂', R₁, and R₂ in the component [d] is an alkyl group, it is preferable for the alkyl group to have 1 to 5 carbon atoms. If it has 1 to 5 carbon atoms, it allows the component [c] and the epoxy resin to become higher in compatibility with each other, and accordingly it will be likely to have better curing characteristics and form a cured thermosetting epoxy resin with still better mechanical property. Examples of alkyl groups having 1 to 5 carbon atoms include the methyl group, ethyl group, propyl group, butyl group, isopropyl group, and pentyl group.

The thermosetting epoxy resin composition according to the present invention may further include a component [e] as specified below.
[e]: onium halide salt

If the component [c] and the component [e] are contained together, it allows the thermosetting epoxy resin composition to have a high fast curability that cannot be realized by the component [c] alone, thus leading to a smaller Tc/Ti ratio. This is thought to be attributable to the fact that the component [e] acts to promote the catalytic action of the component [c].

The onium halide salt to be used for the present invention is an onium salt in which the counter anion is a halide ion. There are no specific limitations on such an onium salt, but it is preferably a quaternary ammonium salt or a quaternary phosphonium salt.

Examples of quaternary ammonium halides include trimethyloctadecylammonium chloride, trimethyloctadecylammonium bromide, benzyltrimethylammonium chloride, benzyltrimethylammonium bromide, tetrabutylammonium chloride, tetrabutylammonium bromide, (2-methoxyethoxymethyl)triethylammonium chloride, (2-methoxyethoxymethyl)triethylammonium bromide, (2-acetoxyethyl)trimethylammonium chloride, (2-acetoxyethyl)trimethylammonium bromide, (2-hydroxyethyl)trimethylammonium chloride, (2-hydroxyethyl)trimethylammonium bromide, bis(polyoxyethylene)dimethylammonium chloride, bis(polyoxyethylene)dimethylammonium bromide, 1-hexadecylpyridinium chloride, and 1-hexadecylpyridinium bromide.

Examples of quaternary phosphonium halides include trimethyloctadecylphosphonium chloride, trimethyloctadecylphosphonium bromide, benzyltrimethylphosphonium chloride, benzyltrimethylphosphonium bromide, tetrabutylphosphonium chloride, tetrabutylphosphonium bromide, (2-methoxyethoxymethyl)triethylphosphonium chloride, (2-methoxyethoxymethyl)triethylphosphonium bromide, (2-acetoxyethyl)trimethylphosphonium chloride, (2-acetoxyethyl)trimethylphosphonium bromide, (2-hydroxyethyl)trimethylphosphonium chloride, (2-hydroxyethyl)trimethylphosphonium bromide, bis(polyoxyethylene)dimethylphosphonium chloride, bis(polyoxyethylene)dimethylphosphonium bromide, tetraphenylphosphonium bromide, acetonyltriphenylphosphonium chloride, (4-carboxybutyl)triphenylphosphonium bromide, (4-carboxypropyl)triphenylphosphonium bromide, (2,4-dichlorobenzyl)triphenylphosphonium chloride, 2-dimethylaminoethyltriphenylphosphonium bromide, ethoxycarbonylmethyl(triphenyl)phosphonium bromide, (formylmethyl)triphenylphosphonium chloride, N-methylanilinotriphenylphosphonium iodide, and phenacyltriphenylphosphonium bromide.

It is more preferable for the thermosetting epoxy resin composition according to the present invention to include both the component [d] and the component [e], in addition to the components [a], [b], and [c].

The thermosetting epoxy resin composition according to the present invention may further include a component [f] as specified below.

### Component [f]: elastomer type toughness improving agent

The elastomer type toughness improving agent is an additive that is designed to improve the toughness of a molded article and contains an elastomer structure in its chemical structure. The inclusion of the component [f] along with the components [a] to [c] in the thermosetting epoxy resin composition serves to produce a cured thermosetting epoxy resin in which toughness is enhanced specifically.

Examples of such an elastomer type toughness improving agent include crosslinked rubber particles such as core shell rubber particles, thermoplastic elastomers such as block copolymers, terminal reactive rubbers such as carboxyl-terminated butadiene-nitrile rubber (hereinafter occasionally referred to as CTBN), and rubber modified epoxy such as CTBN modified epoxy.

For the present invention, the total quantity of the component [f] preferably accounts for 0.2 mass% or more and 8 mass% or less, more preferably 0.2 mass% or more and 4 mass% or less, and still more preferably 0.2 mass% or more and 2 mass% or less, of the total quantity, which accounts for 100 mass%, of the thermosetting epoxy resin composition.

The thermosetting epoxy resin composition according to the present invention may further include a component [g] as specified below.
[g]: a compound whose peak reaction temperature Tg during the reaction thereof with the hydroxyl group is lower by 15°C or more than the peak reaction temperature Tb of the component [b] during the reaction thereof with the hydroxyl group
The temperature Tg is the peak temperature in the exothermic reaction curve that is determined while a 10:1 by mass mixture of 1-phenoxy-2-propanol and the component [g] is subjected to differential scanning calorimetry performed at a temperature ramp rate of 10°C/min. The temperature Tb is the peak temperature in the exothermic reaction curve that is determined while a 10:1 by mass mixture of 1-phenoxy-2-propanol and the component [b] is subjected to differential scanning calorimetry performed at a temperature ramp rate of 10°C/min.

The component [g] described above can act as a hydroxyl group capping agent. For the present invention, the hydroxyl group capping agent is a compound that reacts with the hydroxyl group to cap it and more specifically, contains in its molecule a functional group that can act to protect the hydroxyl group.

If the component [g] is contained, hydroxyl groups present in the thermosetting epoxy resin composition, particularly those hydroxyl groups likely to exist in a small amount in the component [a], are capped. This works to prevent the side reaction for urethanization from occurring between the component [b] and hydroxyl groups, and accordingly, the epoxy resin composition according to the present invention will have a prolonged induction time and therefore can be used more suitably as a matrix resin for production of a fiber-reinforced composite material.

Here, the fact that the exothermic peak reaction temperature Tg during the reaction of the component [g] with the hydroxyl group is lower by 15°C or more than the exothermic peak reaction temperature Tb during the reaction of the component [b] with the hydroxyl group allows hydroxyl groups present in the thermosetting epoxy resin composition to undergo a urethanization reaction more actively with the component [g] than with the component [b]. Thus, the thermosetting epoxy resin composition according to the present invention is likely to have better latent property.

For the present invention, the exothermic peak reaction temperature Tg in the reaction of the component [g] with the hydroxyl group means the temperature at which the hydroxyl group capping reaction occurs most actively while a mixture of the component [g] and a particular hydroxy-containing compound is prepared and heated at a constant heating rate. More specifically, 1-phenoxy-2-propanol is adopted as a hydroxy-containing compound to simulate an epoxy resin containing a hydroxyl group, and a 10:1 by mass mixture of this hydroxy-containing compound and the component [g] is prepared and subjected to differential scanning calorimetry (DSC) performed at a temperature ramp rate of 10°C/min. The exothermic peak reaction temperature during the hydroxyl group capping reaction is determined from the exothermic reaction curve and adopted as Tg.

For the present invention, the exothermic peak reaction temperature Tb in the reaction of the component [b] with the hydroxyl group means the temperature at which the urethanization reaction between the hydroxyl group and the isocyanate group in the component [b] occurs most actively while a mixture of the component [b] and a particular hydroxy-containing compound is prepared and heated at a constant heating rate. More specifically, 1-phenoxy-2-propanol is adopted as a hydroxy-containing compound to simulate an epoxy resin containing a hydroxyl group, and a 10:1 by mass mixture of this hydroxy-containing compound and the component [b] is prepared and subjected to differential scanning calorimetry (DSC) performed at a temperature ramp rate of 10°C/min. The exothermic peak reaction temperature during the hydroxyl group capping reaction is determined from the exothermic reaction curve and adopted as Tb.

For the present invention, the total quantity of the component [g] preferably accounts for 0.5 part by mass or more and 20 parts by mass or less, more preferably 1 part by mass or more and 15 parts by mass or less, and still more preferably 1 part by mass or more and 10 parts by mass or less, relative to the total quantity, which accounts for 100 parts by mass, of the component [a].

For the present invention, it is preferable for the component [g] to include a monoisocyanate compound that has one isocyanate group in its molecule.

Examples of the monoisocyanate compound that has one isocyanate group in its molecule include methyl isocyanate, ethyl isocyanate, n-propyl isocyanate, isopropyl isocyanate, n-butyl isocyanate, isobutyl isocyanate, octadecyl isocyanate, cyclohexyl isocyanate, chlorosulfonyl isocyanate, phenyl isocyanate, chlorophenyl isocyanate, tolyl isocyanate, xylyl isocyanate, trimethylphenyl isocyanate, acetylphenyl isocyanate, ethoxyphenyl isocyanate, cyanophenyl isocyanate, dimethoxyphenyl isocyanate, naphthyl isocyanate, biphenylyl isocyanate, phenoxyphenyl isocyanate, fluorophenyl isocyanate, bromophenyl isocyanate, benzenesulfonyl isocyanate, o-toluenesulfonyl isocyanate, and p-toluenesulfonyl isocyanate. Of these, from the viewpoint of increasing the induction time, sulfonyl isocyanate compounds are preferable, and chlorosulfonyl isocyanate, benzenesulfonyl isocyanate, o-toluenesulfonyl isocyanate, and p-toluenesulfonyl isocyanate are more preferable.

Here, the monoisocyanate compounds that have one isocyanate group in their molecules may be contained singly or a mixture of two or more thereof may be contained together.

The molded article according to the present invention is produced by heat-curing the thermosetting epoxy resin composition according to the present invention. There are no specific limitations on the heat-curing conditions and method to use, and an appropriate temperature and curing time may be adopted to suit the shape and purpose of the molded article.

The first embodiment of the fiber-reinforced composite material according to the present invention includes the molded article according to the present invention and a reinforcing fiber.

The molding material for fiber-reinforced composite material according to the present invention includes the thermosetting epoxy resin composition according to the present invention and a reinforcing fiber. There are no specific limitations on the molding material for fiber-reinforced composite material according to the present invention as long as it includes the thermosetting epoxy resin composition according to the present invention and a reinforcing fiber, and the reinforcing fiber may be impregnated, or may not be impregnated, with the thermosetting epoxy resin composition. Furthermore, the thermosetting epoxy resin composition may be in an unreacted state or may be in a partly reacted state, that is, in a B-staged state.

The second embodiment of the fiber-reinforced composite material according to the present invention is produced by heat-curing the molding material for fiber-reinforced composite material according to the present invention.

The first embodiment of the production method for a fiber-reinforced composite material according to the present invention includes a step for impregnating a reinforcing fiber with the thermosetting epoxy resin according to the present invention and a subsequent step for heat-curing it. Examples of the first embodiment of the production method for a fiber-reinforced composite material according to the present invention include the prepreg molding method, tow prepreg method, FW (filament winding) method, press forming method, pultrusion method, and resin film infusion method.

The second embodiment of the production method for a fiber-reinforced composite material according to the present invention includes a step for putting a woven fabric containing reinforcing fibers as primary component in a mold, a step for injecting the thermosetting epoxy resin composition according to the present invention to impregnate them, and a subsequent step for heat-curing it. Examples of the second embodiment of the production method for a fiber-reinforced composite material according to the present invention include the RTM (resin transfer molding) method.

There are no specific limitations on the production method for a fiber-reinforced composite material, but the RTM method is preferable because the thermosetting epoxy resin composition according to the present invention shows an induction time, in which the resin flows, at the curing temperature.

The production method for a fiber-reinforced composite material is described in more detail below taking the RTM method as as an example. A woven fabric containing a reinforcing fiber as primary component is placed in a mold and a thermosetting epoxy resin composition is injected into them to perform impregnation, followed by heat-curing it in the mold to perform molding. The primary component referred to herein is the component that accounts for the largest proportion of all components in the woven fabric.

For this production method for a fiber-reinforced composite material, when the thermosetting epoxy resin composition is injected into the woven fabric containing a reinforcing fiber as primary component that is placed in a mold, it is preferable to inject the thermosetting epoxy resin composition through a plurality of ports provided in the mold. Specifically, a mold having a plurality of ports may be used and appropriate production conditions suitable for the intended fiber-reinforced composite material may be adopted such as injecting the thermosetting epoxy resin composition through a plurality of ports simultaneously or sequentially at different times. This is preferable because it serves to produce various molded articles that differ in shape or size. Although the number and shape of these ports are not particularly limited, the use of as large number as possible of ports is desirable to realize a short injection time, and it is preferable for them to be properly located to suit the shape of the molded article and minimize the flow length of the resin.

The injection pressure used for the injection of the thermosetting epoxy resin composition is commonly 0.1 to 1.0 MPa and preferably 0.1 to 0.6 MPa from the viewpoint of the injection time and equipment cost. Furthermore, it may also be useful to adopt the VaRTM (vacuum-assisted resin transfer molding) method, which is designed to evacuate air from the mold to assist the injection of the thermosetting epoxy resin composition. When pressurized injection is performed, it is also desirable to evacuate air from the mold before injecting the thermosetting epoxy resin composition because it serves to inhibit the formation of voids.

Reinforcing fibers that can be used suitably for the present invention include glass fiber, aramid fiber, carbon fiber, and boron fiber. In particular, carbon fiber is used suitably because it serves to produce a fiber-reinforced composite material having good mechanical properties such as high strength and modulus in spite of light weight.

It is preferable for the carbon fiber to have a substantially perfect circular cross section. Here, for a single fiber, a substantially perfect circular cross section is defined to be one in which the ratio r/R between the major axis R and the minor axis r is 0.9 or more as measured under an optical microscope. The major axis R referred to above means the diameter of the circle circumscribed on the cross section of the single yarn whereas the minor axis r means the diameter of the circle inscribed in the cross section of the single yarn. If a carbon fiber having a perfect circular cross-section is used, a base material formed thereof can be impregnated in a favorable manner with the thermosetting epoxy resin composition, leading to a decrease in the risk of generation of unimpregnated portions.

It is preferable for the carbon fiber to have an average fiber diameter in the range of 4.0 to 8.0 µm, more preferably in the range of 5.0 to 7.0 µm, and still more preferably in the range of 5.3 to 7.0 µm. If a carbon fiber having an average fiber diameter in this range is used, it can form a fiber-reinforced composite material having both high impact resistance and high tensile strength.

It is preferable for the carbon fiber to have a surface oxygen concentration O/C in the range of 0.03 to 0.22. Here, the surface oxygen concentration is calculated from the O₁ₛ peak area [O₁ₛ] and the C₁ₛ peak area [C₁ₛ] measured by X-ray photoelectron spectroscopy based on the following equation: surface oxygen concentration O/C = ([O₁ₛ] / [C₁ₛ]) / (sensitivity correction value). The surface oxygen concentration O/C is preferably in the range of 0.05 to 0.22, and more preferably in the range of 0.08 to 0.22. If O/C is 0.22 or less, such carbon fibers are likely to serve to produce a fiber-reinforced composite material having sufficiently high tensile strength. If O/C is 0.03 or more, such carbon fibers will have increased adhesiveness to the thermosetting epoxy resin composition and the carbon fibers will serve for easy production of a fiber-reinforced composite material having sufficiently good mechanical property. A means of realizing a surface oxygen concentration O/C in the above range is, for example, to adopt an appropriate type of electrolyte solution, concentration thereof, and quantity of electricity for performing electrolytic oxidation.

These carbon fibers may be used in combination with, for example, inorganic fibers such as glass fiber, metal fiber, and ceramic fiber, organic synthetic fibers such as polyamide fiber, polyester based fiber, polyolefin based fiber, and novoloid fiber, and metal wires, metal meshes, and nonwoven metal fabrics of gold, silver, copper, blue copper, brass, phosphor bronze, aluminum, nickel, steel, stainless steel, etc., unless good effects of the invention are impaired.

The rate of content of these carbons is preferably 30 mass% or more, more preferably 50 mass% or more, and still more preferably 70 mass% or more, of all fibers. It is preferable for the carbon fibers to have a rate of content in the above range because it serves to produce a lightweight fiber-reinforced composite material having good mechanical property.

For large size members of automobiles, aircraft, blades for windmill power generation, etc., glass fiber is used suitably as reinforcing fiber because it serves for low cost production of lightweight members.

It is preferable for such glass fiber to have a surface functional group that can form a covalent bond with an isocyanate group. It is known that the so-called silanol group (Si-OH), which contains a silicon atom bonded to a hydroxyl group, exists on the surface of glass fiber, and it is also known that chemical properties of a glass fiber surface can be improved by bonding an appropriate coupling agent etc. having a functional group selected from various ones to the silanol group. Here, the expression "having a surface functional group that can form a covalent bond with an isocyanate group" means that at least one functional group that can form a covalent bond with an isocyanate group through a chemical reaction exists on the glass fiber surface. In the case of a glass fiber having a surface functional group that can form a covalent bond with an isocyanate group, the isocyanate compound of the component [b] in the thermosetting epoxy resin composition can form a chemical bond to the glass fiber and it serves to produce a fiber-reinforced composite material in which the glass fiber is adhered more strongly to the thermosetting epoxy resin composition, leading to easy development of high strength. However, an excessive increase in the adhesiveness between the glass fiber and the epoxy resin composition can cause a decrease in tensile strength as described later, and therefore, it is preferable that the surface of the glass fiber be treated moderately with a coupling agent.

When using these surface functional groups on glass fiber, it is preferable to adopt at least one functional group selected from hydroxyl group, oxirane group, amino group, thiol group, and carboxyl group. If a glass fiber having a surface functional group as listed above is used, high adhesiveness will develop easily at the interface between the glass fiber and the thermosetting epoxy resin composition. In particular, it is preferable for the surface functional group present on the glass fiber to be the amino group because it agrees well with the epoxy resin composition and works moderately to form a covalent bond with the isocyanate compound of the component [b].

For the glass fiber, it is preferable that a functional group having an active hydrogen be present on its surface. Here, an active hydrogen refers to a highly reactive hydrogen atom bonded with a nitrogen, oxygen, or sulfur atom in an organic compound. For example, one amino group has two active hydrogens. Examples of such a functional group having an active hydrogen include the hydroxyl group, oxirane group, amino group, thiol group, and carboxyl group.

It is preferable for such a surface functional group on glass fiber to be formed by treatment with at least one selected from the group consisting of silane coupling agents, titanium coupling agents, aluminum coupling agents, and zirconium coupling agents. These coupling agents may be used singly or as a combination of two or more thereof. If there exist too many silanol groups on the surface of glass fiber, the isocyanate compound of the compound [b] contained in the epoxy resin composition will develop strong chemical bonding with the glass fiber to realize stronger adhesion, but the epoxy resin, in the event of being fractured under tensile stress, may be destroyed because of being unable to utilize the fiber strength, possibly leading to a decrease in tensile strength. Therefore, it is preferable for the glass fiber to have a surface treated moderately with a coupling agent etc.

Examples of useful silane coupling agents for such glass fiber include silanes containing an amino group such as γ-aminopropyl trimethoxysilane, γ-aminopropyl triethoxysilane, γ-aminopropyl triisopropoxysilane, γ-aminopropylmethyl dimethoxysilane, γ-aminopropylmethyl diethoxysilane, γ-(2-aminoethyl)aminopropyl trimethoxysilane, γ-(2-aminoethyl)aminopropylmethyl dimethoxysilane, γ-(2-aminoethyl)aminopropyl triethoxysilane, γ-(2-aminoethyl)aminopropylmethyl diethoxysilane, γ-(2-aminoethyl)aminopropyl triisopropoxysilane, γ-ureidopropyl trimethoxysilane, N-phenyl-γ-aminopropyl trimethoxysilane, N-benzyl-γ-aminopropyl trimethoxysilane, and N-vinylbenzyl-γ-aminopropyl triethoxysilane; silanes containing a thiol group such as γ-mercaptopropyl trimethoxysilane, γ-mercaptopropyl triethoxysilane, γ-mercaptopropylmethyl dimethoxysilane, and γ-mercaptopropylmethyl diethoxysilane; silanes containing an oxirane group such as γ-glycidoxypropyl trimethoxysilane, γ-glycidoxypropyl triethoxysilane, γ-glycidoxypropylmethyl dimethoxysilane, β-(3,4-epoxycyclohexyl)ethyl trimethoxysilane, β-(3,4-epoxycyclohexyl)ethyl triethoxysilane; and silanes containing a carboxyl group such as β-carboxyethyl triethoxysilane, β-carboxyethylphenyl bis(2-methoxyethoxy)silane, and N-β-(carboxymethyl)aminoethyl-γ-aminopropyl trimethoxysilane.

Examples of useful titanium coupling agents include isopropyltri(N-aminoethyl-aminoethyl) titanate, tetraoctylbis(ditridecylphosphite) titanate, tetra(2,2-diallyloxymethyl-1-butyl) bis(ditridecyl)phosphite titanate, bis(dioctylpyrophosphate) oxyacetate titanate, bis(dioctylpyrophosphate) ethylene titanate, isopropyltrioctanoyl titanate, isopropyldimethacrylisostearoyl titanate, isopropyltridodecylbenzenesulfonyl titanate, isopropylisostearoyldiacrylate titanate, isopropyltri(dioctylphosphate) titanate, isopropyltricumylphenyl titanate, and tetraisopropylbis(dioctylphosphite) titanate.

In particular, it is preferable to use a silane coupling agent in the form of a silane having an amino group because it agrees well with the epoxy resin composition and serves to achieve a moderate increase in adhesive strength and an increase in impact resistance.

When such glass fiber contains a coupling agent, it preferably accounts for 0.01 to 5 parts by mass, more preferably 0.05 to 4 parts by mass, and still more preferably 0.1 to 3 parts by mass, relative to 100 parts by mass of the glass fiber. If the rate of content of the coupling agent is in the aforementioned range, it is preferable because it allows the glass fiber to increase in wettability by the thermosetting epoxy resin composition and it leads to a moderate improvement in adhesiveness and impregnating property, possibly serving to realize improved mechanical property.

To form a layer of a coupling agent, a good method is, for example, to spread a solution containing the coupling agent over the surface of a glass fiber base and then heat-treat it. There are no specific limitations on the solvent to use for preparing a solution of a coupling agent unless it reacts with the coupling agent, and useful examples include aliphatic hydrocarbon based solvents such as hexane, aromatic solvents such as benzene, toluene, and xylene, ether based solvents such as tetrahydrofuran, alcohol based solvents such as methanol and propanol, ketone based solvents such as acetone, and water, and these solvents may be used singly or as a mixture of two or more thereof.

For this glass fiber component, any type of glass fiber may be used if it suits the purpose. Examples of glass fiber include E glass, A glass, C glass, D glass, R glass, S glass, ECR glass, NE glass, quartz, and others prepared from glass compositions useful for fiber production that are generally known as fluorine-free and/or boron-free E glass derivatives.

These glass fibers may be used in combination with, for example, inorganic fibers such as carbon fiber, metal fiber, and ceramic fiber, organic synthetic fibers such as polyamide fiber, polyester based fiber, polyolefin based fiber, and novoloid fiber, and metal wires, metal meshes, and nonwoven metal fabrics of gold, silver, copper, blue copper, brass, phosphor bronze, aluminum, nickel, steel, stainless steel, etc., unless good effects of the invention are impaired.

The rate of content of these glass fibers is preferably 30 mass% or more, more preferably 50 mass% or more, and still more preferably 70 mass% or more, of all fibers. It is preferable for the glass fibers to have a rate of content in the above range because it serves to produce a lightweight fiber-reinforced composite material having good mechanical property and high weather resistance.

These reinforcing fibers may be either short fiber or continuous fiber, or may be a combination thereof. The use of a continuous fiber is preferable in order to obtain a fiber-reinforced composite material having good mechanical property and a high volume fraction of fiber (Vf).

For the fiber-reinforced composite material according to the present invention, the reinforcing fiber may be in the form of a strand, but it is preferable to use a base material that contains, as the reinforcing fiber, processed fiber in the form of a mat, woven fabric, knit fabric, braid, or unidirectional sheet. Of these, woven fabrics are suitably used because they are not only useful for easy production of a high-Vf fiber-reinforced composite material but also high in handleability.

### EXAMPLES

The present invention is described in more detail below with reference to examples, but the invention should not be construed as being limited thereto.

In Examples 1 to 12 and Comparative examples 1 to 7, samples were produced as described below (see also Tables 1 to 3).

### (1) Materials for thermosetting epoxy resin composition

### • Component [a]: epoxy resin

[a]-1 jER (registered trademark) 825 (bisphenol A type epoxy resin, epoxy equivalent weight 175, manufactured by Mitsubishi Chemical Corporation)
[a]-2 jER (registered trademark) 806 (bisphenol F type epoxy resin, epoxy equivalent weight 165, manufactured by Mitsubishi Chemical Corporation)
[a]-3 Kane Ace (registered trademark) MX-267 epoxy resin component (manufactured by Kaneka Corporation)

### • Component [b]: isocyanate compound

[b]-1 Lupranate (registered trademark) M20S (polymeric MDI, isocyanate equivalent weight 134, manufactured by BASF INOAC Polyurethanes Ltd.)
[b]-2 Lupranate (registered trademark) MI (monomeric MDI, isocyanate equivalent weight 126, manufactured by BASF INOAC Polyurethanes Ltd.)

### • Component [c]: inorganic salt

[c]-1 lithium iodide (manufactured by Tokyo Chemical Industry Co., Ltd.)
[c]-2 lithium bromide (manufactured by Tokyo Chemical Industry Co., Ltd.)
[c]-3 lithium chloride (manufactured by Tokyo Chemical Industry Co., Ltd.)
[c]-4 calcium iodide (manufactured by Tokyo Chemical Industry Co., Ltd.)

### • Component [d]: a compound containing a structure as represented by the formula (I)

[d]-1 PEG-300 (manufactured by Sanyo Chemical Industries Ltd.)
[d]-2 NEWPOL (registered trademark) BPE-60 (bisphenol A ethylene oxide addition product, manufactured by Sanyo Chemical Industries Ltd.)
[d]-3 EPOMIN (registered trademark) SP-003 (polyethylene imine, manufactured by NOF Corporation)

### • Component [e]: onium halide salt

[e]-1 tetrabutyl ammonium bromide (manufactured by Tokyo Chemical Industry Co., Ltd.)
[e]-2 tetrabutyl ammonium chloride (manufactured by Tokyo Chemical Industry Co., Ltd.)

### • Component [f]: elastomer type toughness improving agent

[f]-1 Kane Ace (registered trademark) MX-267 primary component (manufactured by Kaneka Corporation)

### • Component [g]: a compound showing an exothermic peak reaction temperature Tg during its reaction with the hydroxyl group that is lower by 15°C or more than the exothermic peak reaction temperature Tb during the reaction of the component [b] with the hydroxyl group

[g]-1 p-chlorophenyl isocyanate (manufactured by Tokyo Chemical Industry Co., Ltd.)
[g]-2 p-toluene sulfonyl isocyanate (manufactured by Tokyo Chemical Industry Co., Ltd.)

### • Other additives

Isophorone diamine (manufactured by Tokyo Chemical Industry Co., Ltd.), jER Cure (registered trademark) W (manufactured by Mitsubishi Chemical Corporation), and Rikacid (registered trademark) HH (manufactured by New Japan Chemical Co., Ltd.)

### (2) Measurement of exothermic peak reaction temperature Tb in reaction of component [b] with hydroxyl group

A mixture was prepared by adding 10 parts by mass of the component [b] to 100 parts by mass of a hydroxy-containing compound, namely, 1-phenoxy-2-propanol (manufactured by Tokyo Chemical Industry Co., Ltd.), and examined by differential scanning calorimetry in the range of 0°C to 250°C at a temperature ramp rate of 10°C/min using a differential scanning calorimetry apparatus (DSC2910, manufactured by TA Instruments). From the resulting exothermic reaction curve, the exothermic peak reaction temperature in the urethanization reaction was determined and taken as Tb (°C).

### (3) Measurement of exothermic peak reaction temperature Tg in reaction of component [g] with hydroxyl group

A mixture was prepared by adding 10 parts by mass of the component [g] to 100 parts by mass of a hydroxy-containing compound, namely, 1-phenoxy-2-propanol (manufactured by Tokyo Chemical Industry Co., Ltd.), and examined by differential scanning calorimetry in the range of 0°C to 250°C at a temperature ramp rate of 10°C/min using a differential scanning calorimetry apparatus (DSC2910, manufactured by TA Instruments). From the resulting exothermic reaction curve, the exothermic peak reaction temperature in the urethanization reaction was determined and taken as Tg (°C).

### (4) Preparation of thermosetting epoxy resin composition

The component [a], component [c], component [d], and component [e] were mixed in a proportion (ratio by mass) as specified in Tables 1 to 3 and kneaded for 30 minutes at room temperature, and then the component [f], component [g], and other additives were added to prepare a thermosetting epoxy resin composition.

### (5) Measurement of viscosity of thermosetting epoxy resin composition

Using a dynamic viscoelasticity measuring machine (ARES, manufactured by TA Instruments) equipped with parallel plates with a diameter of 40 mm, the complex viscosity η* of a resin composition prepared according to the procedure described in the above section (4) "Preparation of thermosetting epoxy resin composition" was measured at the measuring temperature specified in Tables 1 to 3 under the measuring conditions of a frequency of 1 Hz and a Gap of 1 mm, and the value taken immediately after the start of measurement was adopted as the viscosity of the epoxy resin composition.

### (6) Measurement of induction time (Ti)

Using a dynamic viscoelasticity measuring machine (ARES, manufactured by TA Instruments) equipped with parallel plates with a diameter of 40 mm, the change with time in the complex viscosity η* of a resin composition prepared according to the procedure described in the above section (4) "Preparation of thermosetting epoxy resin composition" was measured at the measuring temperature specified in Tables 1 to 3 under the measuring conditions of a frequency of 1 Hz and a Gap of 1 mm. In comparison with the value taken immediately after the start of measurement, the time required for η* to reach a value four times as large was adopted as the induction time (Ti).

### (7) Measurement of curing time (Tc)

Using a polymer curing measuring apparatus (ATD-1000, manufactured by Alpha Technologies LLC), the change with time in the dynamic viscoelasticity of a resin composition prepared according to the procedure described in the above section (4) "Preparation of thermosetting epoxy resin composition" was measured at the measuring temperature specified in Tables 1 to 3 under the measuring conditions of a frequency of 1 Hz and a strain of 1%, and time required for the complex viscosity η* to reach 1,000,000 Pa·s was adopted as the curing time (Tc).

### (8) Preparation of molded article

A resin composition prepared according to the procedure described in the above section (4) "Preparation of thermosetting epoxy resin composition" was deaerated in a vacuum, and while maintaining a closed type press molding machine at the curing temperature specified in Tables 1 to 3, it was pressed under a pressure of 1 MPa for the time Tc determined in the above section (7) "Measurement of curing time" to produce a molded article of a flat plate shape having an intended thickness.

### (9) Measurement of glass transition temperature of molded article

From a molded article with a thickness of 2 mm prepared according to the procedure described in the above section (8) "Preparation of molded article", a test piece with a width of 10 mm and a length of 40 mm was cut out and the test piece was set to the solid torsion fixture in a dynamic viscoelasticity measuring apparatus (ARES, manufactured by TA Instruments) and subjected to measurement over the temperature range from 30°C to 300°C under the conditions of a temperature ramp rate of 5°C/min, a frequency of 1 Hz, and a strain of 0.1%. In a scatter diagram in which the vertical axis represents the common logarithm of the storage modulus while the horizontal axis represents the temperature, the temperature at the point where the tangent drawn in the glass region and the tangent drawn in the glass transition region intersect each other was taken as the glass transition temperature.

### (10) Measurement of flexural modulus and bending deflection of molded article

From a molded article with a thickness of 2 mm prepared according to the procedure described in the above section (8) "Preparation of molded article", a test piece with a width of 10 mm and a length of 60 mm was cut out and subjected 3-point bending test with a span-to-span distance of 32 mm, and the flexural modulus and bending deflection, which is an indicator of toughness, were determined according to JIS K7171-1994.

### (11) Measurement of toughness of molded article

From a molded article with a thickness of 6 mm prepared according to the procedure described in the above section (8) "Preparation of molded article", a test piece with a width of 12.7 mm was cut out, processed into a specimen shape specified in ASTM D5045-99, and subjected to SENB test according to ASTM D5045-99. A total of 15 samples were prepared (n = 15) and the average of measurements was calculated as critical stress intensity factor Kic and used to represent their toughness.

### (Example 1)

According to the procedure described in the above section (4) "Preparation of thermosetting epoxy resin composition", thermosetting epoxy resin compositions were prepared by mixing the components specified in Table 1 based on the numbers of parts specified therein. For the thermosetting epoxy resin compositions prepared in this way, the ratio Tc/Ti measured at the measuring temperature specified in Table 1 was in the range of 3.9 to 5.0, showing that they had favorable latent property and fast curability. In addition, they gave cured resin products showing favorable bending deflection values in the range of 3.9 to 6.8 mm. Here, Example 1 include Example 1-1 to Example 1-3 as shown in Table 1. Other Examples and Comparative examples given in Table 1 to Table 3 also have similar features.

### (Example 2)

According to the procedure described in the above section (4) "Preparation of thermosetting epoxy resin composition", thermosetting epoxy resin compositions were prepared by mixing the components specified in Table 1 based on the numbers of parts specified therein. For the thermosetting epoxy resin compositions prepared in this way, the ratio Tc/Ti measured at the measuring temperature specified in Table 1 was in the range of 3.0 to 5.2, showing that they had favorable latent property and fast curability. In addition, they gave cured resin products showing favorable bending deflection values in the range of 3.7 to 6.6 mm.

### (Example 3)

PEG-300 was added as component [d] in addition to the components used in Example 1. The resulting cured epoxy resin products had highly favorable Tc/Ti ratios in the range of 2.1 to 2.8. In addition, the cured resin products showed favorable bending deflection values in the range of 5.0 to 7.4 mm.

### (Example 4)

As compared with Example 1, the component [b] was replaced and its amount was decreased. The component [c] was also replaced. The resulting cured epoxy resin products had permissible Tc/Ti ratios in the range of 4.4 to 8.2. In addition, the cured resin products showed acceptable bending deflection values in the range of 3.1 to 4.6 mm.

### (Example 5)

As compared with Example 3, different compounds were used as the component [b], component [c], and component [d]. The resulting cured epoxy resin products had favorable Tc/Ti ratios in the range of 3.5 to 3.8. In addition, the cured resin products showed highly favorable bending deflection values in the range of 6.7 to 7.8 mm.

### (Example 6)

As compared with Example 1, tetrabutyl ammonium chloride was added as component [e], and the compounds used as component [b] and component [c] were replaced. The resulting cured epoxy resin products had excellent Tc/Ti ratios in the range of 1.6 to 1.8. In addition, the cured resin products showed acceptable bending deflection values in the range of 5.1 to 5.5 mm.

### (Example 7)

Thermosetting epoxy resin compositions were prepared by mixing the components specified in Table 2 based on the numbers of parts specified therein. The resulting cured epoxy resin products had excellent Tc/Ti ratios in the range of 1.3 to 1.7. In addition, the cured resin products showed favorable bending deflection values in the range of 5.5 to 8.3 mm. Furthermore, they had favorable glass transition temperatures that were higher by 10°C or more than the curing temperatures.

### (Example 8)

As compared with Example 7, the compound used as component [a] was replaced; p-chlorophenyl isocyanate was added as component [g]; and the compound used as component [d] was replaced. The resulting cured epoxy resin product had an excellent Tc/Ti ratio of 1.6. In addition, the cured resin product showed a highly favorable bending deflection value of 8.7 mm.

### (Example 9)

A thermosetting epoxy resin composition was prepared by mixing the components specified in Table 2 based on the numbers of parts specified therein. The resulting cured epoxy resin product had an excellent Tc/Ti ratio of 1.4. In addition, the cured resin product showed a highly favorable bending deflection value of 8.6 mm.

### (Example 10)

As compared with Example 8, p-chlorophenyl isocyanate used as component [g] was replaced with p-toluenesulfonyl isocyanate. It served to give an excellent Tc/Ti ratio of 1.5. In addition, the resulting cured resin products showed highly favorable bending deflection values in the range of 5.8 to 8.6 mm.

### (Example 11)

Thermosetting epoxy resin compositions were prepared by mixing the components specified in Table 2 based on the numbers of parts specified therein. As compared with Example 10, the content of the component [g] was increased. The resulting cured epoxy resin products had excellent Tc/Ti ratios in the range of 1.1 to 2.5. In addition, the cured resin products showed highly favorable bending deflection values in the range of 7.3 to 9.3 mm.

### (Example 12)

Thermosetting epoxy resin compositions were prepared by mixing the components specified in Table 2 based on the numbers of parts specified therein. Kane Ace (registered trademark) MX-267 was added as component [f]. The resulting cured epoxy resin products had excellent Tc/Ti ratios in the range of 1.7 to 4.4, and the cured resin products showed highly favorable bending deflection values in the range of 8.0 to 12 mm. They also gave excellent Kic values in the range of 1.4 to 1.7 MPa·m^{0.5}.

### (Comparative example 1)

As shown in Table 3, the component [a] was blended with jER cure (registered trademark) W used as epoxy resin curing agent. The resulting cured epoxy resin failed to be cured sufficiently at 70°C and was unable to give a Tc/Ti value. Curing was attempted at a temperature of 180°C as well, but only an unacceptable Tc/Ti ratio of 50 was obtained.

### (Comparative example 2)

As shown in Table 3, the component [a] was blended with isophorone diamine used as epoxy resin curing agent. The resulting cured epoxy resin products gave unacceptable Tc/Ti ratios in the range of 50 to 60.

### (Comparative example 3)

As shown in Table 3, the component [a] was blended with Rikacid (registered trademark) HH used as epoxy resin curing agent. The resulting cured epoxy resin products gave unacceptable Tc/Ti ratios in the range of 50 to 144.

### (Comparative example 4)

As compared with Examples 1 to 3, Kane Ace (registered trademark) MX-267 was added as component [f]. The resulting cured epoxy resin products gave unacceptable Tc/Ti ratios in the range of 41 to 125. Their Kic values were as low as 0.9 to 1.0 MPa·m^{0.5}, showing that unlike Example 12, the combined use of the component [f] with the components [a] to [c] failed to work specifically to improve their toughness.

### (Comparative example 5)

As shown in Table 3, the component [a] and the component [b] were blended with the component [e] as epoxy resin curing agent. The resulting cured epoxy resin products gave unacceptable Tc/Ti ratios in the range of 10 to 75.

### (Comparative example 6)

As shown in Table 3, epoxy resin compositions were prepared from the component [a] and the component [b]. The resulting cured epoxy resins failed to be cured sufficiently and were unable to give Tc/Ti values.

### (Comparative example 7)

As shown in Table 3, the component [a] was blended with Rikacid (registered trademark) HH used as epoxy resin curing agent, and the component [c] was included to prepared epoxy resin compositions. The component [c] was added. The resulting epoxy resin compositions gave unacceptable Tc/Ti ratios in the range of 48 to 118. In addition, the resulting cured resin products showed unacceptable bending deflection values in the range of 2.9 to 3.1 mm.

### [Table 1]

**[Table 1]**

| | | | Example 1-1 | Example 1-2 | Example 1-3 | Example 2-1 | Example 2-2 | Example 2-3 | Example 3-1 | Example 3-2 | Example 3-3 | Example 4-1 | Example 4-2 | Example 4-3 | Example 5-1 | Example 5-2 |
|---|---|---|---|---|---|---|---|---|---|---|---|---|---|---|---|---|
| composition | [a]: epoxy resin | [a]-1: jER^{®}825 | 100 | 100 | 100 | 100 | 100 | 100 | 100 | 100 | 100 | 100 | 100 | 100 | 100 | 100 |
| | [b]: isocyanate compound | [b]-1: Lupranate^{®}M20S | 78 | 78 | 78 | 78 | 78 | 78 | 78 | 78 | 78 | | | | | |
| | | [b]-2: Lupranate^{®}MI | | | | | | | | | | 50 | 50 | 50 | 71 | 71 |
| | [c]: inorganic salt | [c]-1: lithium iodide | | | | | | | | | | | | | 1 | 1 |
| | | [c]-2: lithium bromide | 1 | 1 | 1 | | | | 1 | 1 | 1 | | | | | |
| | | [c]-3: lithium chloride | | | | | | | | | | 0.5 | 0.5 | 0.5 | | |
| | | [c]-4: calcium iodide | | | | 1 | 1 | 1 | | | | | | | | |
| | [d]: compound having a structure of formula I in its molecule | [d]-1: PEG-300 | | | | | | | 4 | 4 | 4 | | | | | |
| | | [d]-3: EPOMIN^{®}SP-300 | | | | | | | | | | | | | 5.5 | 5.5 |
| uncured resin property | measuring temperature (curing temperature) | °C | 50 | 100 | 120 | 50 | 100 | 120 | 50 | 100 | 120 | 50 | 100 | 120 | 100 | 120 |
| | induction time: Ti | minutes | 123 | 20 | 8 | 193 | 29 | 13 | 117 | 22 | 10 | 130 | 22 | 9 | 25 | 8 |
| | curing time: Tc | minutes | 480 | 100 | 38 | 584 | 152 | 51 | 250 | 48 | 28 | 570 | 180 | 52 | 88 | 30 |
| | Tc/Ti | | 3.9 | 5.0 | 4.8 | 3.0 | 5.2 | 3.9 | 2.1 | 2.2 | 2.8 | 4.4 | 8.2 | 5.8 | 3.5 | 3.8 |
| | viscosity | mPa·s | 275 | 47 | 21 | 263 | 40 | 19 | 242 | 41 | 18 | 331 | 63 | 26 | 221 | 19 |
| | [b]/[a] | stoichiometric ratio of component [b] to component [a] | 1.0 | 1.0 | 1.0 | 1.0 | 1.0 | 1.0 | 1.0 | 1.0 | 1.0 | 0.7 | 0.7 | 0.7 | 1.0 | 1.0 |
| cured resin property | flexural modulus | GPa | 3.5 | 3.3 | 3.3 | 3.2 | 3.2 | 3.1 | 3.5 | 3.4 | 3.3 | 3.6 | 3.5 | 3.5 | 3.7 | 3.7 |
| | bending deflection | mm | 3.9 | 5.5 | 6.8 | 3.7 | 5.4 | 6.6 | 5.0 | 7.3 | 7.4 | 3.1 | 4.6 | 4.6 | 6.7 | 7.8 |
| | glass transition temperature | °C | 62 | 109 | 121 | 59 | 104 | 115 | 65 | 110 | 123 | 50 | 95 | 116 | 103 | 125 |
| | Kic | MPa·m^{0.5} | 0.9 | 1.0 | 1.0 | 0.9 | 1.0 | 1.1 | 1.1 | 1.1 | 1.2 | 0.8 | 0.8 | 0.9 | 1.1 | 1.1 |

### [Table 2]

**[Table 2]**

| | | | Example 6-1 | Example 6-2 | Example 6-3 | Example 7-1 | Example 7-2 | Example 7-3 | Example 8 | Example 9 | Example 10-1 | Example 10-2 | Example 11-1 | Example 11-2 | Example 11-3 | Example 11-4 | Example 12-1 | Example 12-2 | Example 12-3 | Example 12-4 |
|---|---|---|---|---|---|---|---|---|---|---|---|---|---|---|---|---|---|---|---|---|
| | | [a]-1: jER^{®}825 | 100 | 100 | 100 | 100 | 100 | 100 | 80 | | 80 | 80 | 80 | 80 | | | 91 | 91 | 91 | |
| | | [a]-2: jER^{®}806 | | | | | | | 20 | 100 | 20 | 20 | 20 | 20 | 100 | 100 | | | | 91 |
| | [a]: epoxy resin | [a]-3: Kane Ace^{®}MX-267 epoxy resin component | | | | | | | | | | | | | | | 9 | 9 | 9 | 9 |
| | [b]: isocyanate compound | [b]-1: Lupranate^{®}M20S | | | | 78 | 78 | 78 | 77 | | 77 | 77 | 77 | 77 | | | 78 | | 78 | |
| | | [b]-2: Lupranate^{®}MI | 71 | 71 | 71 | | | | | 114 | | | | | 114 | 114 | | 71 | | 114 |
| | [c]: inorganic salt | [c]-2: lithium bromide | | | | 1 | 1 | 1 | 1 | 0.5 | 1 | 1 | 1 | 1 | 0.5 | 0.5 | 1 | | 1 | 0.5 |
| | | [c]-3: lithium chloride | 1 | 1 | 1 | | | | | | | | | | | | | 1 | | |
| | [d]: compound having a structure of formula I in its molecule | [d]-1: PEG-300 | | | | 5 | 5 | 5 | | 5 | | | | | 5 | 5 | | | 5 | 5 |
| | | [d]-2: NEWPOL^{®}BPE-60 | | | | | | | 6 | | 6 | 6 | 6 | 6 | | | | | | |
| composition | [e]: onium halide salt | [e]-1: tetrabutyl ammonium bromide | | | | 2 | 2 | 2 | 2 | | 2 | 2 | 2 | 2 | | | | | 2 | |
| | | [e]-2: tetrabutyl ammonium chloride | 2 | 2 | 2 | | | | | | | | | | | | | 2 | | |
| | [f]: elastomer type toughness improving agent | [f]-1: KaneAce^{®}MX-267 primary component | | | | | | | | | | | | | | | 5 | 5 | 5 | 5 |
| | [g]: compound whose peak reaction temperature Tg during reaction with hydroxyl group is lower by 15°C or more than peak reaction temperature Tb of component [b] during reaction with hydroxyl group | [g]-1: p-chlorophenyl isocyanate | | | | | | | 3 | 10 | | | | | | | | | | |
| | | [g]-2: p-toluene sulfonyl isocyanate | | | | | | | | | 3 | 3 | 8 | 8 | 13 | 13 | | | | 13 |
| component property | exothermic peak reaction temperature of [b]: Tb | °C | 95 | 95 | 95 | 95 | 95 | 95 | 95 | 95 | 95 | 95 | 95 | 95 | 95 | 95 | 95 | 95 | 95 | 95 |
| | exothermic peak reaction temperature of [g]: Tg | °C | - | - | - | - | - | - | 75 | 75 | 45 | 45 | 45 | 45 | 45 | 45 | - | - | - | 45 |
| uncured resin property | measuring temperature (curing temperature) | °C | 50 | 100 | 120 | 50 | 100 | 120 | 120 | 120 | 50 | 120 | 50 | 120 | 120 | 180 | 120 | 120 | 120 | 120 |
| | induction time: Ti | minutes | 120 | 14 | 6 | 127 | 20 | 4 | 7 | 53 | 160 | 6 | 219 | 8 | 33 | 2 | 9 | 8 | 5 | 40 |
| | curing time: Tc | minutes | 210 | 22 | 10 | 170 | 33 | 6 | 11 | 76 | 240 | 9 | 239 | 9 | 65 | 5 | 40 | 14 | 9 | 69 |
| | Tc/Ti | | 1.8 | 1.6 | 1.7 | 1.3 | 1.7 | 1.5 | 1.6 | 1.4 | 1.5 | 1.5 | 1.1 | 1.1 | 2.0 | 2.5 | 4.4 | 1.8 | 1.8 | 1.7 |
| | viscosity | mPa·s | 265 | 45 | 20 | 201 | 16 | 11 | 10 | 11 | 17 | 9 | 16 | 8 | 7 | 1 | 29 | 28 | 15 | 10 |
| | [b]/[a] | stoichiometric ratio of component [b] to component [a] | 1.0 | 1.0 | 1.0 | 1.0 | 1.0 | 1.0 | 1.0 | 1.6 | 1.0 | 1.0 | 1.0 | 1.0 | 1.6 | 1.6 | 1.0 | 1.0 | 1.0 | 1.6 |
| cured resin property | flexural modulus | GPa | 3.9 | 3.7 | 3.7 | 3.9 | 3.8 | 3.8 | 3.7 | 4.2 | 3.9 | 3.8 | 3.8 | 3.7 | 4.1 | 3.8 | 3.1 | 3.4 | 3.5 | 3.8 |
| | bending deflection | mm | 5.1 | 5.5 | 5.4 | 5.5 | 7.7 | 8.3 | 8.7 | 8.6 | 5.8 | 8.6 | 7.3 | 9.3 | 8.4 | 9.0 | 10 | 8.0 | 12 | 11 |
| | glass transition temperature | °C | 61 | 110 | 127 | 64 | 112 | 131 | 130 | 132 | 66 | 129 | 65 | 127 | 130 | 181 | 119 | 124 | 128 | 127 |
| | Kic | MPa·m^{0.5} | 1.0 | 1.1 | 1.1 | 1.1 | 1.2 | 1.2 | 1.3 | 0.9 | 0.9 | 1.1 | 1.0 | 1.2 | 1.0 | 1.1 | 1.4 | 1.6 | 1.7 | 1.4 |

### [Table 3]

**[Table 3]**

| | | | Comparative example 1-1 | Comparative example 1-2 | Comparative example 2-1 | Comparative example 2-2 | Comparative example 3-1 | Comparative example 3-2 | Comparative example 4-1 | Comparative example 4-2 | Comparative example 43 | Comparative example 5-1 | Comparative example 5-2 | Comparative example 6-1 | Comparative example 6-2 | Comparative example 7-1 | Comparative example 7-2 |
|---|---|---|---|---|---|---|---|---|---|---|---|---|---|---|---|---|---|
| composition | [a]: epoxy resin | [a]-1: jER^{®}825 | 100 | 100 | 100 | 100 | 100 | 100 | 97 | 91 | 91 | 100 | 100 | 100 | 100 | 100 | 100 |
| | | [a]-3: Kane Ace^{®}MX-267 epoxy resin component | | | | | | | 3 | 9 | 9 | | | | | | |
| | [b]: isocyanate compound | [b]-2: Lupranate^{®}MI | | | | | | | | | | 71 | 71 | 71 | 71 | | |
| | [c]: inorganic salt | [c]-3: lithium chloride | | | | | | | | | | | | | | 1 | 1 |
| | [e]: onium halide salt | [e]-2: tetrabutylammonium chloride | | | | | | | | | | 2 | 2 | | | | |
| | [f]: elastomer type toughness improving agent | [f]-1: Kane Ace^{®}MX-267 primary component | | | | | | | 2 | 5 | 5 | | | | | | |
| | other additives | isophorone diamine | | | 24.3 | 24.3 | | | | 24.3 | | | | | | | |
| | | jER Cure^{®}W | 25.5 | 25.5 | | | | | 25.5 | | | | | | | | |
| | | Rikacid^{®}HH | | | | | 45 | 45 | | | 45 | | | | | 45 | 45 |
| uncured resin property | measuring temperature (curing temperature) | °C | 70 | 180 | 70 | 140 | 70 | 120 | 180 | 70 | 70 | 70 | 120 | 70 | 120 | 70 | 120 |
| | induction time: Ti | minutes | 200 | 4 | 3 | 0.5 | 0.5 | 3 | 5 | 3.5 | 0.6 | 78 | 2 | 300 | 150 | 0.6 | 3.2 |
| | curing time: Tc | minutes | - | 200 | 150 | 30 | 72 | 150 | 207 | 154 | 75 | 810 | 150 | - | - | 71 | 152 |
| | Tc/Ti | | - | 50 | 50 | 60 | 144 | 50 | 41 | 44 | 125 | 10 | 75 | - | - | 118 | 48 |
| | viscosity | mPa·s | 165 | 7 | 170 | 14 | 192 | 21 | 8 | 236 | 267 | 113 | 15 | 139 | 19 | 190 | 22 |
| | [b]/[a] | stoichiometric ratio of component [b] to component [a] | - | - | - | - | - | - | - | - | - | 1.0 | 1.0 | 1.0 | 1.0 | - | - |
| cured resin property | flexural modulus | GPa | - | 3.5 | 3.2 | 3.3 | 3.1 | 3.2 | 3.2 | 2.6 | 2.6 | 3.4 | 3.4 | - | - | 3.1 | 3.2 |
| | bending deflection | mm | - | 3.1 | 4.0 | 5.0 | 5.0 | 4.8 | 4.2 | 5.9 | 7.4 | 3.7 | 4.2 | - | - | 3.1 | 2.9 |
| | glass transition temperature | °C | - | 169 | 71 | 139 | 71 | 125 | 168 | 70 | 70 | 72 | 110 | - | - | 70 | 126 |
| | Kic | MPa·m^{0.5} | - | 0.8 | 0.7 | 0.7 | 0.6 | 0.7 | 0.9 | 1.0 | 1.0 | 0.8 | 0.9 | - | - | 0.8 | 0.7 |

In Examples 13 to 21 and Comparative example 8, samples were produced as described below (see also Table 4).

### (12) Materials for thermosetting epoxy resin composition

The materials used to prepare thermosetting epoxy resin compositions in the Examples were the same as those listed in the above section (1) "Materials for thermosetting epoxy resin composition".

### (13) Preparation of carbon fiber

Carbon fibers [I] to [V] were prepared according to the procedure described below.

### <Carbon fiber [I]>

Using a copolymer consisting of 99.4 mol% acrylonitrile and 0.6 mol% methacrylic acid, an acrylic fiber precursor with a single fiber fineness of 0.08 tex and a filament number of 12,000 was produced by the dry-wet spinning method.

This fiber precursor was heated in air at 240°C to 280°C at an elongation ratio of 1.05 to convert it into a flameproof fiber and then additionally heated in a nitrogen atmosphere in the temperature range of 300°C to 900°C at a temperature ramp rate of 200°C/min and an elongation ratio of 1.10, followed by calcining it while increasing the temperatures up to 1,400°C to realize carbonization. The resulting carbon fiber had an areal weight of 0.50 g/m and a density of 1.80 g/cm³.

Then, it was subjected to electrolytic oxidation treatment with an aqueous ammonium bicarbonate solution with a concentration of 1.0 mol/L used as electrolyte solution at an electricity quantity of 3 C/g·tank. Then, after the electrolytic oxidation treatment, the carbon fiber was rinsed and dried in air at 150°C to provide a carbon fiber [I].

The carbon fiber [I] had a surface oxygen concentration O/C of 0.08, an average fiber diameter of 5.5 µm, and a substantially perfect circular cross-section shape with an r/R ratio of 0.95.

### <Carbon fiber [II]>

Except for performing electrolytic oxidation at an electric quantity of 30 C/g tank, the preparation procedure was performed under the same conditions as for the carbon fiber [I] to provide a carbon fiber [II].

The carbon fiber [II] had a surface oxygen concentration O/C of 0.18, an average fiber diameter of 5.5 µm, and a substantially perfect circular cross-section shape with an r/R ratio of 0.95.

### <Carbon fiber [III]>

Except for performing electrolytic oxidation at an electric quantity of 1 C/g·tank, the preparation procedure was performed under the same conditions as for the carbon fiber [I] to provide a carbon fiber [III].

The carbon fiber [III] had a surface oxygen concentration O/C of 0.03, an average fiber diameter of 5.5 µm, and a substantially perfect circular cross-section shape with an r/R ratio of 0.95.

### <Carbon fiber [IV]>

Except for performing electrolytic oxidation at an electric quantity of 100 C/g tank, the preparation procedure was performed under the same conditions as for the carbon fiber [I] to provide a carbon fiber [IV].

The carbon fiber [IV] had a surface oxygen concentration O/C of 0.22, an average fiber diameter of 5.5 µm, and a substantially perfect circular cross-section shape with an r/R ratio of 0.95.

### < Carbon fiber [V]>

Except that the wet spinning method was used to prepare an acrylic fiber precursor and that the resulting acrylic fiber precursor had a single fiber fineness of 0.09 tex, the preparation procedure was performed under the same conditions as for the carbon fiber [I] to provide a carbon fiber [V]. The resulting carbon fiber had an areal weight of 0.50 g/m and a density of 1.80 g/cm³.

The carbon fiber [V] had a surface oxygen concentration O/C of 0.05, an average fiber diameter of 5.4 µm, and a flattened cross-section shape with an r/R ratio of 0.8.

### (14) Preparation of carbon fiber woven fabric

Carbon fiber yarns prepared according to the procedure described in the above section (13) "Preparation of carbon fiber" were used as warp and weft to produce a plain weave carbon fiber woven fabric with an areal weight of 190 g/m².

### (15) Preparation of thermosetting epoxy resin composition

An epoxy resin composition was prepared according to the same procedure as described in the above section (4) "Preparation of thermosetting epoxy resin composition" except for adopting the component constitution (ratio by mass) specified in Table 4.

### (16) Preparation of fiber-reinforced composite material

In a mold having a plate cavity, 10 carbon fiber fabric pieces cut to a size of 400 mm × 400 mm prepared according to the above (14) "Preparation of carbon fiber woven fabric" were laminated, and the mold was clamped using a press machine. In doing so, the thickness of the cavity was set so as to produce a fiber-reinforced composite material with a volume fraction of fiber of 40%. Then, the internal space of the mold was depressurized by a vacuum pump to a pressure smaller by 0.1 MPa than atmospheric pressure, followed by heating to the curing temperature specified Table 4. A thermosetting epoxy resin composition was prepared according to the procedure described in the above section (4) "Preparation of thermosetting epoxy resin composition" and injected under a pressure of 0.2 MPa using a resin injection machine. Then, it was heated for the time Tc determined according to the procedure described in the above section (7) "Measurement of curing time (Tc)", immediately followed by demolding it to provide a fiber-reinforced composite material.

### (17) Measurement of in-plane shear strength

A fiber-reinforced composite material was prepared according to the procedure described in the above section (16) "Preparation of fiber-reinforced composite material" and subjected to ±45° tensile test according to JIS K 7019:1999 to determine the in-plane shear strength.

### (18) Evaluation of reinforcing fiber impregnating property of thermosetting epoxy resin composition

Impregnating property seen in the resin injection step performed in the (16) "Preparation of fiber-reinforced composite material" was evaluated according to the undermentioned four grade criterion based on the void amount in the fiber-reinforced composite material. It was rated as good if the void amount accounted for less than 0.5% of the fiber-reinforced composite material, rated as fair if it was 0.5% or more and less than 1%, and rated as bad if the void amount accounted for 1% or more of the fiber-reinforced composite material.

The void amount in a fiber-reinforced composite material was determined by smooth-polishing a cross-section of the fiber-reinforced composite material, observing it under an epifluorescence type optical microscope, and calculating it from the area ratio of the void in the fiber-reinforced composite material.

### (Example 13)

After preparing a thermosetting epoxy resin according to the procedure described in the above section (15) "Preparation of thermosetting epoxy resin composition", a fiber-reinforced composite material was produced according to the procedure described in the above section (16) "Preparation of fiber-reinforced composite material" using <Carbon fiber [I]> as the carbon fiber component. The resulting fiber-reinforced composite material had a favorable in-plane shear strength of 210 MPa. For impregnating property, it was rated as fair.

### (Example 14)

A thermosetting epoxy resin composition prepared according to the same procedure as in Example 13 except for adding PEG-300 as component [d] was adopted. The resulting fiber-reinforced composite material had a favorable in-plane shear strength of 220 MPa. In addition, it had favorable impregnating property and was rated as good.

### (Example 15)

After preparing a thermosetting epoxy resin according to the procedure described in the above section (15) "Preparation of thermosetting epoxy resin composition", a fiber-reinforced composite material was produced according to the procedure described in the above section (16) "Preparation of fiber-reinforced composite material" using <Carbon fiber [I]> as the carbon fiber component. The resulting fiber-reinforced composite material had a favorable in-plane shear strength of 210 MPa. For impregnating property, it was rated as fair.

### (Example 16)

A thermosetting epoxy resin composition prepared according to the same procedure as in Example 13 except for adding PEG-300 as component [d] and tetrabutylammonium bromide as component [e] was adopted. The resulting fiber-reinforced composite material had a favorable in-plane shear strength of 232 MPa. In addition, it had favorable impregnating property and was rated as good.

### (Example 17)

A thermosetting epoxy resin composition to use was prepared in the same way as in Example 16 except for replacing the compound used as component [a], adding p-toluenesulfonyl isocyanate as component [g], and replacing the compound used as component [d]. The resulting fiber-reinforced composite material had a favorable in-plane shear strength of 240 MPa. In addition, it had favorable impregnating property and was rated as good.

### (Example 18)

As compared with Example 13, the carbon fiber was replaced with <Carbon fiber [II]>. The resulting fiber-reinforced composite material had an excellent in-plane shear strength of 255 MPa. In addition, it had favorable impregnating property and was rated as good.

### (Example 19)

As compared with Example 13, the carbon fiber was replaced with <Carbon fiber [III]>. The resulting fiber-reinforced composite material had an acceptable in-plane shear strength of 195 MPa. In addition, it had favorable impregnating property and was rated as good.

### (Example 20)

As compared with Example 13, the carbon fiber was replaced with <Carbon fiber [IV]>. The resulting fiber-reinforced composite material had an excellent in-plane shear strength of 250 MPa. In addition, it had favorable impregnating property and was rated as good.

### (Example 21)

As compared with Example 13, the carbon fiber was replaced with <Carbon fiber [V]>. The resulting fiber-reinforced composite material had an acceptable in-plane shear strength of 190 MPa. For impregnating property, it was rated as fair.

### (Comparative example 8)

As shown in Table 4, a thermosetting epoxy resin composition to use was prepared by mixing the component [a], component [b], and component [c]. In addition, <Carbon fiber [I]> was used as the carbon fiber component. The resulting fiber-reinforced composite material had an inferior in-plane shear strength of 150 MPa. The fiber reinforced composite material was found to contain many voids and it had inferior impregnating property and was rated as bad.

### [Table 4]

**Table 4**

| | | | Example 13 | Example 14 | Example 15 | Example 16 | Example 17 | Example 18 | Example 19 | Example 20 | Example 21 | Comparative example 8 |
|---|---|---|---|---|---|---|---|---|---|---|---|---|
| | [a]: epoxy resin | [a]-1: jER^{®}825 | 100 | 100 | 100 | 100 | 80 | 100 | 100 | 100 | 100 | 100 |
| | | [a]-2: jER^{®}806 | | | | | 20 | | | | | |
| | [b]: isocyanate compound | [b]-1: Lupranate^{®}M20S | 78 | 78 | | 78 | 77 | 78 | 78 | 78 | 78 | |
| | | [b]-2: Lupranate^{®}MI | | | 71 | | | | | | | 71 |
| | [c]: inorganic salt | [c]-2: lithium bromide | 1 | 1 | | 1 | 1 | 1 | 1 | 1 | 1 | |
| | | [c]-3: lithium chloride | | | 1 | | | | | | | |
| composition | [d]: compound having a structure of formula I in its molecule | [d]-1: PEG-300 | | 4 | | 5 | | | | | | |
| | | [d]-2: NEWPOL^{®}BPE-60 | | | | | 6 | | | | | |
| | [e]: onium halide salt | [e]-1: tetrabutylammonium bromide | | | | 2 | 2 | | | | | |
| | | lel-2: tetrabutylammonium chloride | | | 2 | | | | | | | 2 |
| | [g]: compound whose peak reaction temperature Tg during reaction with hydroxyl group is lower by 15°C or more than peak reaction temperature Tb of component [b] during reaction with hydroxyl group | [g]-2: p-toluenesulfonyl isocyanate | | | | | 3 | | | | | |
| carbon fiber | | | [I] | [I] | [I] | [I] | [I] | [II] | [III] | [IV] | [V] | [I] |
| glass fiber | | | - | - | - | - | - | - | - | - | - | - |
| curing temperature [°C] | | | 100 | 100 | 100 | 100 | 100 | 100 | 100 | 100 | 100 | 100 |
| in-plane shear strength [MPa] | | | 210 | 220 | 210 | 232 | 240 | 255 | 195 | 250 | 190 | 150 |
| tensile strength [MPa] | | | - | - | - | - | - | - | - | - | - | - |
| impregnating property | | | Fair | Good | Fair | Good | Good | Good | Good | Good | Fair | Bad |

In Examples 22 to 32 and Comparative example 9, samples were produced as described below (see also Table 5).

### (19) Materials for thermosetting epoxy resin composition

The materials used to prepare thermosetting epoxy resin compositions in these Examples were the same as those listed in the above section (1) "Materials for thermosetting epoxy resin composition".

### (20) Preparation of glass fiber

Glass fibers [I] to [VII] were prepared according to the procedure described below.

### <Glass fiber [I]>

Glass fiber woven fabric KS2700 (manufactured by Nitto Boseki Co., Ltd.) was used.

### <Glass fiber [II]>

Glass fiber woven fabric KS2700 (manufactured by Nitto Boseki Co., Ltd.) was immersed for 7 hours in a methanol solution (1 mass%) of coupling agent KBM-403 (3-glycidoxypropyl trimethoxysilane, manufactured by Shin-Etsu Chemical Co., Ltd.) and then dried for 5 hours in a hot air oven at 110°C to remove the solvent, thereby proving a glass fiber [II] that had oxirane groups on the surface thereof.

### <Glass fiber [III]>

Except for using KBM-903 (3-aminopropyl trimethoxysilane, manufactured by Shin-Etsu Chemical Co., Ltd.) as the coupling agent, the procedure for the glass fiber [II] was carried out under the same conditions to prepare a glass fiber [III] that had amino groups on the surface thereof.

### <Glass fiber [IV]>

Except for using KBM-803 (3-mercaptopropyl trimethoxysilane, manufactured by Shin-Etsu Chemical Co., Ltd.) as the coupling agent, the procedure for the glass fiber [II] was carried out under the same conditions to prepare a glass fiber [IV] that had thiol groups on the surface thereof.

### <Glass fiber [V]>

Except for using X-12-967C (3-trimethoxysilylpropylsuccinic anhydride, manufactured by Shin-Etsu Chemical Co., Ltd.) as the coupling agent, the procedure for the glass fiber [II] was carried out under the same conditions to prepare a glass fiber [V] that had carboxyl groups on the surface thereof.

### <Glass fiber [VI]>

Except for using KBM-1003 (vinyltrimethoxysilane, manufactured by Shin-Etsu Chemical Co., Ltd.) as the coupling agent, the procedure for the glass fiber [II] was carried out under the same conditions to prepare a glass fiber [VI] that had vinyl groups on the surface thereof.

### <Glass fiber [VII]>

Except for using methyltrimethoxysilane (manufactured by Kanto Chemical Co., Inc.) as the coupling agent, the procedure for the glass fiber [II] was carried out under the same conditions to prepare a glass fiber [VII] that had methyl groups on the surface thereof.

### (21) Preparation of thermosetting epoxy resin composition

An epoxy resin composition was prepared according to the same procedure as described in the above section (4) "Preparation of thermosetting epoxy resin composition" except for adopting the component constitution (ratio by mass) specified in Table 5.

### (22) Preparation of fiber-reinforced composite material

Glass fibers prepared according to the procedure described in the above section (20) "Preparation of glass fiber" were used in combination with a thermosetting epoxy resin composition prepared according to the procedure described in the above section (21) "Preparation of thermosetting epoxy resin composition" to produce a fiber-reinforced composite material according to the procedure described in the above section (16) "Preparation of fiber-reinforced composite material".

### (23) Measurement of in-plane shear strength

A fiber-reinforced composite material prepared according to the procedure described in the above section (22) "Preparation of fiber-reinforced composite material" was subjected to in-plane shear strength measurement according to the procedure described in the above section (17) "Measurement of in-plane shear strength".

### (24) Measurement of tensile strength

A fiber-reinforced composite material prepared according to the procedure described in the above section (22) "Preparation of fiber-reinforced composite material" was subjected to tensile test according to JIS K 7164:2005 to determine the tensile strength.

### (25) Evaluation of reinforcing fiber impregnating property of thermosetting epoxy resin composition

Impregnating property seen in the resin injection step performed in the above section (22) "Preparation of fiber-reinforced composite material" was evaluated according to the same impregnating property evaluation procedure as used in the above section (18) "Evaluation of reinforcing fiber impregnating property of thermosetting epoxy resin composition".

### (Example 22)

After preparing a thermosetting epoxy resin according to the procedure described in the above section (21) "Preparation of thermosetting epoxy resin composition", a fiber-reinforced composite material was produced according to the procedure described in the above section (21) "Preparation of fiber-reinforced composite material" using <Glass fiber [I]> as the glass fiber component. The resulting fiber-reinforced composite material had a favorable in-plane shear strength of 170 MPa and an acceptable tensile strength of 230 MPa. For impregnating property, it was rated as fair.

### (Example 23)

A thermosetting epoxy resin composition prepared according to the same procedure as in Example 22 except for adding PEG-300 as component [d] was adopted. The resulting fiber-reinforced composite material had a favorable in-plane shear strength of 172 MPa and an acceptable tensile strength of 234 MPa. In addition, it had favorable impregnating property and was rated as good.

### (Example 24)

After preparing a thermosetting epoxy resin according to the procedure described in the above section (21) "Preparation of thermosetting epoxy resin composition", a fiber-reinforced composite material was produced according to the procedure described in the above section (22) "Preparation of fiber-reinforced composite material" using <Glass fiber [I]> as the glass fiber component. The resulting fiber-reinforced composite material had a favorable in-plane shear strength of 176 MPa and an acceptable tensile strength of 240 MPa. For impregnating property, it was rated as fair.

### (Example 25)

A thermosetting epoxy resin composition prepared according to the same procedure as in Example 24 except for adding PEG-300 as component [d] and tetrabutylammonium bromide as component [e] was adopted. The resulting fiber-reinforced composite material had a favorable in-plane shear strength of 175 MPa and a particularly favorable tensile strength of 250 MPa. For impregnating property, it was rated as good.

### (Example 26)

A thermosetting epoxy resin composition to use was prepared in the same way as in Example 25 except for replacing the compound used as component [a], adding p-toluenesulfonyl isocyanate as component [g], and replacing the compound used as component [d]. The resulting fiber-reinforced composite material had a favorable in-plane shear strength of 179 MPa and a particularly favorable tensile strength of 245 MPa. For impregnating property, it was rated as good.

### (Example 27)

As compared with Example 22, the glass fiber was replaced with <Glass fiber [II]>. The resulting fiber-reinforced composite material had a favorable in-plane shear strength of 170 MPa and a favorable tensile strength of 240 MPa. For impregnating property, it was rated as good.

### (Example 28)

As compared with Example 22, the glass fiber was replaced with <Glass fiber [III]>. The resulting fiber-reinforced composite material had an excellent in-plane shear strength of 180 MPa and a particularly favorable tensile strength of 255 MPa. For impregnating property, it was rated as good.

### (Example 29)

As compared with Example 22, the glass fiber was replaced with <Glass fiber [IV]>. The resulting fiber-reinforced composite material had a favorable in-plane shear strength of 170 MPa and a particularly favorable tensile strength of 250 MPa. For impregnating property, it was rated as good.

### (Example 30)

As compared with Example 22, the glass fiber was replaced with <Glass fiber [V]>. The resulting fiber-reinforced composite material had a favorable in-plane shear strength of 168 MPa and a particularly favorable tensile strength of 245 MPa. For impregnating property, it was rated as good.

### (Example 31)

As compared with Example 22, the glass fiber was replaced with <Glass fiber [VI]>. The resulting fiber-reinforced composite material had an acceptable in-plane shear strength of 165 MPa and a particularly favorable tensile strength of 245 MPa. For impregnating property, it was rated as fair.

### (Example 32)

As compared with Example 22, the glass fiber was replaced with <Glass fiber [VII]>. The resulting fiber-reinforced composite material had an acceptable in-plane shear strength of 162 MPa and a particularly favorable tensile strength of 247 MPa. For impregnating property, it was rated as fair.

### (Comparative example 9)

As shown in Table 5, a thermosetting epoxy resin composition to use was prepared by mixing the component [a], component [b], and component [e]. In addition, <Glass fiber [I]> was used as the glass fiber component. The resulting fiber-reinforced composite material had a poor in-plane shear strength of 130 MPa and a poor tensile strength of 200 MPa. The fiber reinforced composite material was found to contain many voids and it had inferior impregnating property and was rated as bad.

### [Table 5]

**[Table 5]**

| | | | Example 22 | Example 23 | Example 24 | Example 25 | Example 26 | Example 27 | Example 28 | Example 29 | Example 30 | Example 31 | Example 32 | Comparative example 9 |
|---|---|---|---|---|---|---|---|---|---|---|---|---|---|---|
| | [a]: epoxy resin | [a]-1: jER^{®}825 | 100 | 100 | 100 | 100 | 80 | 100 | 100 | 100 | 100 | 100 | 100 | 100 |
| | | [a]-2: jER^{®}806 | | | | | 20 | | | | | | | |
| | [b]: isocyanate compound | [b]-1: Lupranate^{®}M20S | 78 | 78 | | 78 | 77 | 78 | 78 | 78 | 78 | 78 | 78 | |
| | | [b]-2: Lupranate^{®}MI | | | 71 | | | | | | | | | 71 |
| | [c]: inorganic salt | [c]-2: lithium bromide | 1 | 1 | | 1 | 1 | 1 | 1 | 1 | 1 | 1 | 1 | |
| | | [c]-3: lithium chloride | | | 1 | | | | | | | | | |
| | [d]: compound having a structure of formula I in its molecule | [d]-1: PEG-300 | | 4 | | 5 | | | | | | | | |
| | | [d]-2: NEWPOL^{®}BPE-60 | | | | | 6 | | | | | | | |
| composition | [e]: onium halide salt | [e]-1: tetrabutyl ammonium bromide | | | | 2 | 2 | | | | | | | |
| | | [e]-2: tetrabutyl ammonium chloride | | | 2 | | | | | | | | | 2 |
| | [g]: compound whose peak reaction temperature Tg during reaction with hydroxyl group is lower by 15°C or more than peak reaction temperature Tb of component [b] during reaction with hydroxyl group | [g]-2: p-toluene sulfonyl isocyanate | | | | | 3 | | | | | | | |
| carbon fiber | | | - | - | - | - | - | - | - | - | - | - | - | - |
| glass fiber | | | [I] | [I] | [I] | [I] | [I] | [II] | [III] | [IV] | [V] | [VI] | [VII] | [I] |
| curing temperature [°C] | | | 100 | 100 | 100 | 100 | 100 | 100 | 100 | 100 | 100 | 100 | 100 | 100 |
| in-plane shear strength [MPa] | | | 170 | 172 | 176 | 175 | 179 | 170 | 180 | 170 | 168 | 165 | 162 | 130 |
| tensile strength [MPa] | | | 230 | 234 | 240 | 250 | 245 | 240 | 255 | 250 | 245 | 245 | 247 | 200 |
| impregnating property | | | Fair | Good | Fair | Good | Good | Good | Good | Good | Good | Fair | Fair | Bad |

### INDUSTRIAL APPLICABILITY

The thermosetting epoxy resin composition according to the present invention exhibits favorable latent property at a curable temperature and has high fast curability and therefore, it can be used widely as a molding material with high productivity. In particular, it can be used suitably for the production of fiber-reinforced composite materials and can contribute to the production of various lightweight structural members.

## Claims

1. A thermosetting epoxy resin composition comprising the following components [a], [b], and [c] and satisfying the relation 1 < Tc/Ti ≤ 9 wherein Tc is the curing time and Ti is the induction time:
[a]: epoxy resin,
[b]: isocyanate compound, and
[c]: inorganic salt.

2. A thermosetting epoxy resin composition as set forth in claim 1 further comprising the following component [e]:
[e]: onium halide salt.

3. A thermosetting epoxy resin composition as set forth in either claim 1 or 2 further comprising the following component [d]:
[d]: a compound containing a structure as represented by the formula (I) in the molecule thereof: 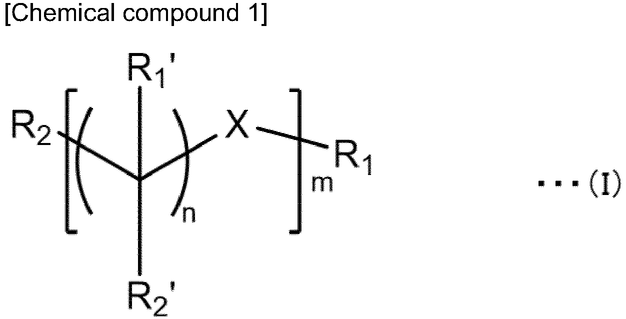 wherein in the formula (I), n is an integer of 1 to 6 and m is an integer of 4 to 1, 000; R₁' and R₂' are each independently a hydrogen atom, an alkyl group, or a hydroxyl group; R₁ and R₂ are each independently a hydrogen atom or an alkyl group; and X is O, NH, S, or COO.

4. A thermosetting epoxy resin composition as set forth in claim 3, wherein R₁'and R₂' in the component [d] are each a hydrogen atom and X is an oxygen atom.

5. An epoxy resin composition as set forth in any one of claims 1 to 4 further comprising the following component [g]:
[g]: a compound whose peak reaction temperature Tg during the reaction thereof with the hydroxyl group is lower by 15°C or more than the peak reaction temperature Tb of the component [b] during the reaction thereof with the hydroxyl group,
wherein the temperature Tg is the peak temperature in the exothermic reaction curve that is recorded while a 10:1 by mass mixture of 1-phenoxy-2-propanol and the component [g] is subjected to differential scanning calorimetry performed at a temperature ramp rate of 10°C/min, and the temperature Tb is the peak temperature in the exothermic reaction curve that is recorded while a 10:1 by mass mixture of 1-phenoxy-2-propanol and the component [b] is subjected to differential scanning calorimetry performed at a temperature ramp rate of 10°C/min.

6. A thermosetting epoxy resin composition as set forth in claim 5, wherein the component [g] includes a monoisocyanate compound having one isocyanate group in the molecule thereof.

7. A thermosetting epoxy resin composition as set forth in any one of claims 1 to 6 further comprising the following component [f]:
[f]: elastomer type toughness improving agent.

8. A thermosetting epoxy resin composition as set forth in any one of claims 1 to 7, wherein the component [c] includes an alkali metal halide.

9. A thermosetting epoxy resin composition as set forth in any one of claims 1 to 8, wherein the stoichiometric ratio [b]/[a] of the component [b] to the component [a] is in the range of 0.7 to 2.0.

10. A molded article produced by heat-curing a thermosetting epoxy resin composition as set forth in any one of claims 1 to 9.

11. A fiber-reinforced composite material comprising a molded article as set forth in claim 10 and a reinforcing fiber.

12. A fiber-reinforced composite material as set forth in claim in claim 11, wherein the reinforcing fiber contains a carbon fiber that meets the following requirements [A] and [B]:
[A] having a substantially perfect circular cross section, and
[B] having an average fiber diameter in the range of 4.0 to 8.0 µm.

13. A fiber-reinforced composite material as set forth in claim 12, wherein the carbon fiber further meets the following requirement [C]:
[C] having a surface oxygen concentration O/C in the range of 0.03 to 0.22,
wherein the surface oxygen concentration is calculated from the O₁ₛ peak area [O₁ₛ] and the C₁ₛ peak area [C₁ₛ] measured by X-ray photoelectron spectroscopy based on the following equation: surface oxygen concentration O/C = ([O₁ₛ] / [C₁ₛ]) / (sensitivity correction value).

14. A fiber-reinforced composite material as set forth in claim 11, wherein the reinforcing fiber contains a glass fiber having a surface functional group that can form a covalent bond with the isocyanate group.

15. A fiber-reinforced composite material as set forth in claim 14, wherein the surface functional groups present in the glass fiber include at least one functional group selected from hydroxyl group, oxirane group, amino group, thiol group, and carboxyl group.

16. A fiber-reinforced composite material as set forth in either claim 14 or 15, wherein the surface functional group present in the glass fiber is formed by treatment with at least one selected from a silane coupling agent, titanium coupling agent, aluminum coupling agent, and zirconium coupling agent.

17. A molding material for fiber-reinforced composite material comprising a thermosetting epoxy resin composition as set forth in any one of claims 1 to 9 and a reinforcing fiber.

18. A molding material for fiber-reinforced composite material as set forth in claim 17, wherein the reinforcing fiber meets the following requirements [A] and [B]:
[A] having a substantially perfect circular cross section, and
[B] having an average fiber diameter in the range of 4.0 to 8.0 µm.

19. A molding material for fiber-reinforced composite material as set forth in claim 18, wherein the reinforcing fiber further meets the following requirement [C]:
[C] having a surface oxygen concentration O/C in the range of 0.03 to 0.22,
wherein the surface oxygen concentration is calculated from the O₁ₛ peak area [O₁ₛ] and the C₁ₛ peak area [C₁ₛ] measured by X-ray photoelectron spectroscopy based on the following equation: surface oxygen concentration O/C = ([O₁ₛ] / [C₁ₛ]) / (sensitivity correction value).

20. A molding material for fiber-reinforced composite material as set forth in claim 19, wherein the reinforcing fiber contains a glass fiber having a surface functional group that can form a covalent bond with the isocyanate group.

21. A molding material for fiber-reinforced composite material as set forth in claim 20, wherein the surface functional groups present in the glass fiber include at least one functional group selected from hydroxyl group, oxirane group, amino group, thiol group, and carboxyl group.

22. A molding material for fiber-reinforced composite material as set forth in either claim 20 or 21, wherein the surface functional group present in the glass fiber is formed by treatment with at least one selected from silane coupling agents, titanium coupling agents, aluminum coupling agents, and zirconium coupling agents.

23. A fiber-reinforced composite material produced by heat-curing a molding material for fiber-reinforced composite material as set forth in any one of claims 17 to 22.

24. A production method for a fiber-reinforced composite material comprising a step for impregnating a reinforcing fiber with a thermosetting epoxy resin as set forth in any one of claims 1 to 9 and a subsequent step for performing the heat-curing thereof.

25. A production method for a fiber-reinforced composite material comprising a step for putting a woven fabric containing a reinforcing fiber as primary component in a mold, a step for injecting a thermosetting epoxy resin composition as set forth in any one of claims 1 to 9 to carry out the impregnation thereof, and a subsequent step for performing the heat-curing thereof.

26. A production method for a fiber-reinforced composite material as set forth in either claim 24 or 25, wherein the reinforcing fiber contains a carbon fiber that meets the following requirements [A] and [B]:
[A] having a substantially perfect circular cross section, and
[B] having an average fiber diameter in the range of 4.0 to 8.0 µm.

27. A production method for a fiber-reinforced composite material as set forth in claim 26, wherein the reinforcing fiber further meets the following requirement [C]:
[C] having a surface oxygen concentration O/C in the range of 0.03 to 0.22,
wherein the surface oxygen concentration is calculated from the O₁ₛ peak area [O₁ₛ] and the C₁ₛ peak area [C₁ₛ] measured by X-ray photoelectron spectroscopy based on the following equation: surface oxygen concentration O/C = ([O₁ₛ] / [C₁ₛ]) / (sensitivity correction value).

28. A production method for a fiber-reinforced composite material as set forth in either claim 24 or 25, wherein the reinforcing fiber contains a glass fiber having a surface functional group that can form a covalent bond with the isocyanate group.

29. A production method for a fiber-reinforced composite material as set forth in claim 28, wherein the surface functional groups present in the carbon fiber include at least one functional group selected from hydroxyl group, oxirane group, amino group, thiol group, and carboxyl group.

30. A production method for a fiber-reinforced composite material as set forth in either claim 28 or 29, wherein the surface functional group present in the glass fiber is formed by treatment with at least one selected from silane coupling agents, titanium coupling agents, aluminum coupling agents, and zirconium coupling agents.
